# EUROPEAN PATENT APPLICATION

(11) **EP 4 704 194 A1**
(43) Date of publication of application: **04.03.2026**
(21) Application number: 24197285.0
(22) Date of filing: 29.08.2024
(51) Int. Cl.: H01M 4/86, H01M 4/88, H01M 4/90, H01M 12/06, H01M 12/08

(54) **METHOD FOR PRODUCING A GAS DIFFUSION ELECTRODE, GAS DIFFUSION ELECTRODE, POWDER, CATALYST INK, ELECTROCHEMICAL DEVICE, BAT-TERY, RESPECTIVE METHODS AND RESPECTIVE USES**

(71) Applicant: Ore Energy BV, 1098 XH Amsterdam (NL)
(72) Inventor: KOSE, Kadir Ozgun, 1363 TB Almere (NL); SALMAN, Yawar, 1404 CR Naarden-Bussum (NL); OKSAS, Abdurrahman Safa, 2515 LK 'S-Gravenhage (NL); YILMAZ, Aytac, 3328 TE Dordrecht (NL)
(74) Representative: Eisenführ Speiser

(57) **Abstract**

Method for producing a gas diffusion electrode (GDE), comprising the following steps:
S1)
preparing or providing:
- an amount of an electrically conductive powder
and
- an amount of a binder;
and
S2)
intermixing the amount of electrically conductive powder prepared or provided in step S1) and the amount of binder prepared or provided in step S1) so that a mixture of electrically conductive powder and binder results
and
producing a foil from said mixture, so that a laminar electrically conductive material (ECM) results, comprising a polymeric matrix and, embedded therein, a particulate material;
and either the additional steps:
S3a)
preparing or providing a catalytic material, wherein the catalytic material is capable to catalyse oxygen reduction reaction (ORR) of a gas diffusion electrode (GDE);
S4a)
coating a first side of the laminar electrically conductive material resulting in step S2), with the catalytic material prepared or provided in step S3a) so that a laminar electrically conductive material (ECM) coated on a first side with a catalytic material coating results;
S5a)
preparing or providing a conductive material comprising interspaces;
S6a)
applying the conductive material comprising interspaces prepared or provided in step S5a) to the catalytic material coating of the laminar electrically conductive material (ECM) coated on a first side with a catalytic material coating resulting in step S4a), so that a gas diffusion electrode (GDE) results;
or the additional steps:
S3b)
preparing or providing a conductive material comprising interspaces, preferably comprising gas filled interspaces;
S4b)
applying the conductive material comprising interspaces, preferably gas filled interspaces, prepared or provided in step S3b) to the laminar electrically conductive material (ECM) resulting in step S2) so that a laminar electrically conductive material (ECM) covered with a conductive material comprising interspaces results;
S5b)
preparing or providing a catalytic material, wherein the catalytic material is capable to catalyse oxygen reduction reaction of a gas diffusion electrode;
S6b)
applying the catalytic material prepared or provided in step S5b) as a coating to the surface of the conductive material comprising interspaces of the laminar electrically conductive material (ECM) covered with a conductive material comprising interspaces resulting in step S4b), so that a gas diffusion electrode (GDE) results.

## Description

The invention relates to a method for producing a gas diffusion electrode (GDE) comprising specific steps. The invention also relates to a gas diffusion electrode comprising specific layers. The invention further relates to a method for producing a powder. The invention also relates to the use of powder for manufacture of specified products. The invention also relates to a method for producing a catalyst ink. The invention further relates to a catalyst ink. The invention also relates to the use of a specified catalyst ink for production of a gas diffusion electrode. The invention also relates to an electrochemical device, comprising a specified gas diffusion electrode. The invention further relates to the use of a specified gas diffusion electrode in an energy storage device. The invention also relates to an oxygen evolution reaction (OER) electrode. The invention further relates to a battery.

The present invention lies on the technical field of industrial gas diffusion electrodes (GDE) and industrial electrochemical devices comprising gas diffusion electrodes (GDE). The technical field is distinctly different from the technical field concerning other electrochemical devices and electrodes as specific technical requirements exist for (industrial) gas diffusion electrodes and (industrial) electrochemical devices comprising them.

Metal air batteries as electrochemical device have the advantage of a high energy density. However, they require different electrode properties for the charging process on one side and the discharging process on the other side. For charging metal air batteries, electrodes with the ability to catalyse the oxygen evolution reaction (OER), so-called oxygen evolution reaction (OER) electrodes, are needed. On the other hand, for discharging metal air batteries, electrodes with the ability to catalyse the oxygen reduction reaction (ORR), so-called oxygen reduction reaction (ORR) electrodes, are required. This frequently leads to an undesirably high complexity of the setup of metal air batteries, frequently needing different electrodes for charging (OER electrode) and discharging (ORR electrode) in addition to the metal electrode (three electrode setup).

Document EP 2 770 565 A1 discloses a process for manufacturing a gas diffusion electrode comprising an electrochemically active layer, a water-repellent layer and an integrated current collector, said process comprising the steps of: (i) preparing said electrochemically active layer comprising an electrically conductive powder and a first binder; (ii) preparing a second layer comprising a poreforming agent and particles of a hydrophobic material and/or a second binder on said electrochemically active layer to provide a laminate; (iii) assembling said electrochemically active layer, said second layer and said current collector such that said electrochemically active layer is sandwiched between said current collector and said second layer; and (iv) rendering said second layer water repellent by realising porosity therein, thereby providing said gas diffusion electrode.

Document US 2014/0238576 A1 discloses a method for making an electrode for an energy storage device comprising the steps of: a) providing powder materials including active material particles, conductive material additives and binder material wherein the working ranges for each include about 70-97% for the active materials, about 0-10% for the conductive material additives, and about 2-20% binder material; b) performing a binder activation step by mixing about 0.1-50% of the total amount of said active materials with said conductive material additives and with said binder; c) providing a solvent and adding and mixing said solvent to the binder mixture from b) including a binder to solvent ratio range of about 1 :0.2 to 1: 10; d) performing a binder deposition step by adding any remaining active materials and conductive additive materials into the mixture from c) and mixing all of said added materials using a high speed mixer; f) performing a film making step by pressing the mixed materials into a sheet; and g) laminating the sheet or film on to a treated current collector to form the electrode; wherein all percentages above equal a weight percent.

Document WO 2007/089119 A1 discloses a method of preparing a gas diffusion layer for a fuel cell, the method comprising: adding a solvent, a dispersant, and an aqueous polymer resin to carbon powder followed by mixing at high speed to prepare a dispersed solution; adding a fluorinated resin suspension to the dispersed solution followed by mixing at low speed to make a carbon slurry; coating the carbon slurry on a carbon substrate followed by drying to form a primer layer; forming a microporous layer on the primer layer; and thermally treating the resultant product.

Document WO 2020/264415 discloses a bifunctional air electrode, comprising: a metal substrate: and particles deposited on the metal substrate, wherein the particles comprise particles of metal oxide catalyst, particles of metal nitride catalyst, or a combination thereof.

First attempts are known from the state of the art trying to reduce complexity of metal air battery setups by combining the charging and discharging electrodes in a single electrode resulting in bifunctional electrodes. However, bifunctional electrodes known from the state of the art suffer several drawbacks including leakage problems, insufficient mechanical stability, corrosion, problems with the specific surface areas of the catalytic materials used being too low and/or others as well as combinations thereof. These and other drawbacks make bifunctional electrodes - as known from the state of the art - generally unsuitable in demanding energy storage applications such as industrial metal air batteries, i.e. metal air batteries with large storage capacities as they are for example used in metal air batteries for grid stabilization.

From the state of the art there is a need for GDEs (gas diffusion electrodes), especially for gas diffusion electrodes for (industrial) metal air batteries that comprise favourably low amounts of metals that are of low abundance in nature and/or obtained via ecologically problematic extraction and purification processes. From the state of the art there is especially a need for ORR and/or bifunctional GDEs (gas diffusion electrodes), that comprise favourably low amounts of metals that are of low abundance in nature and/or obtained via ecologically problematic extraction and purification processes. There is a demand in the technical field of the invention for electrodes that are produced with minimal disadvantages for the environment.

Electrodes for metal air batteries, especially bifunctional electrodes, suffer from a low cyclic durability, meaning that they can be recharged for an undesirably low number of times before needing to be replaced and/or that they corrode to an inacceptable extent after an unfavourably short time of operation.

There is a further demand in the technical field of the present invention for gas diffusion electrodes, especially ORR electrodes (oxygen reduction reaction electrodes) and bifunctional electrodes that possess favourably high mechanical stability. This is frequently very difficult to achieve as ORR electrodes and bifunctional electrodes need to be both: permeable for air and impermeable for electrolyte solution. Thus, there is a need for respective electrodes combining these properties (favourably high permeability for air and favourably low permeability for electrolyte solution) in an advantageous manner.

Moreover, there is a need for respective electrodes that further combine these properties with an advantageous mechanical flexibility of the electrodes, allowing and/or facilitating their handling. There is a specific need for gas diffusion electrodes (GDE electrodes) that possess an advantageous combination of advantageous mechanical robustness, advantageous flexibility, advantageously high permeability for oxygen and advantageously low permeability for aqueous electrolyte solutions.

There is a need for GDE electrodes (gas diffusion electrodes) with such advantageously low permeability for electrolyte solutions that they can be used in leakproof metal air batteries without the need for extra measures to prevent leaking. There is a need for leakproof ORR electrodes and leakproof bifunctional electrodes and for leakproof metal air batteries.

There is a further need in the field of the present invention for gas diffusion electrodes (GDE electrodes), specifically for OER electrodes, ORR electrodes and bifunctional electrodes with advantageously low overpotentials for the oxygen evolution reaction (OER), the oxygen reduction reaction (ORR) and/or combinations thereof. High overpotentials are regularly disadvantageous in the field of the present invention.

There is a need in the field of the present invention for methods to produce bifunctional electrodes in such a way that the catalytic activities for the oxygen evolution reaction (OER), the oxygen reduction reaction (ORR) and/or combinations thereof are advantageous.

There is also a need in the field of the present invention for methods to produce bifunctional electrodes in such a way that the catalytic activities for the oxygen evolution reaction (OER), the oxygen reduction reaction (ORR) and/or combinations thereof are advantageous and whereby the surface areas of all catalysts are sufficient for industrial use.

In the field of the present invention there is a need for gas diffusion electrodes (GDE) that combine as many of the before-mentioned properties as possible. Especially, there is a continuous need for electrodes combining high conductivity with low overpotentials for the oxygen evolution reaction (OER), the oxygen reduction reaction (ORR) and/or combinations thereof.

Gas diffusion electrodes (GDEs), from the state of the art frequently suffer from unequal current distribution. Thus, there is a need for methods to produce respective electrodes with equal spatial current distribution. There is also a need for the respective electrodes, obtainable from such a method.

From the state of the art, there is a need in the field of the present invention for gas diffusion electrodes (GDEs) having a stable three-phase-interaction for the efficient ORR and/or OER reactions in an electrochemical device, preferably in a metal air battery. There is a specific need for gas diffusion electrodes (GDEs) that advantageously combine a continuous, reliable, durable and leakproof three phase boundary.

The term "three phase boundary" is known to the skilled person in the field of the present invention and is used herein in accordance with the usual understanding of the skilled person.

Gas diffusion electrodes (GDEs) from the state of the art, especially oxygen reduction reaction electrodes (ORR electrodes) and bifunctional electrodes from the state of the art, often contain carbon materials and, as a consequence, suffer from carbon corrosion. This carbon corrosion is very disadvantageous in the field of the present invention and is unwanted. Thus, there is a need for gas diffusion electrodes (GDEs), especially bifunctional electrodes with favourably low carbon corrosion or no carbon corrosion.

Further, there is a need for efficient electrochemical devices, being leakproof and having high energy density.

There is a further need for energy storage devices that are easily recyclable and contain as little hazardous materials as possible. The release of environmentally hazardous materials into the environment is unwanted in the field of the present invention. Energy storage devices not containing disadvantageously high amounts of hazardous materials (e.g. heavy metals) are therefore preferred in the field of the present invention; the handling and recycling of such energy storage devices (not containing disadvantageously high amounts of hazardous materials ) is frequently associated with an advantageously low need for energy and apparatuses.

The present invention relates, in its categories, to a method for producing a gas diffusion electrode (GDE) comprising specific steps, a gas diffusion electrode comprising specific layers, a method for producing a perovskite oxide powder, the use of perovskite oxide powder for manufacture of specified products, a method for producing a catalyst ink, a catalyst ink, the use of a specified catalyst ink for production of a gas diffusion electrode, an electrochemical device, the use of a specified gas diffusion electrode in an energy storage device, an oxygen evolution reaction (OER) electrode and to a battery. Embodiments, aspects or properties that are described in connection with one of these categories or described as preferred are each correspondingly or analogously applicable to the respective other categories, and vice versa.

Unless stated otherwise, preferred aspects or embodiments of the invention and their various categories can be combined with other aspects or embodiments of the invention and their various categories, especially with other preferred aspects or embodiments. The combination of respectively preferred aspects or embodiments with one another again results in preferred aspects or embodiments of the invention.

In a primary aspect of the present invention, the above-specified objectives are achieved and the above-specified problems are solved in whole or in part by a method for producing a gas diffusion electrode (GDE), comprising the following steps:

| | |
|---|---|
| S1) | preparing or providing: |
| | - an amount of an electrically conductive powder, |
| | and |
| | - an amount of a binder; |
| S2) | intermixing the amount of electrically conductive powder prepared or provided in step S1) and the amount of binder prepared or provided in step S1) so that a mixture of electrically conductive powder and binder results |
| | and |
| | producing a foil from said mixture, so that a laminar electrically conductive material (ECM) results, preferably comprising a polymeric matrix and, embedded therein, a particulate material; |

and either the additional steps:

| | |
|---|---|
| S3a) | preparing or providing a catalytic material, wherein the catalytic material is capable to catalyse oxygen reduction reaction (ORR) of a gas diffusion electrode (GDE); |
| S4a) | coating a first side of the laminar electrically conductive material resulting in step S2), with the catalytic material prepared or provided in step S3a) so that a laminar electrically conductive material (ECM) coated on a first side with a catalytic material coating results; |

| | |
|---|---|
| S5a) | preparing or providing a conductive material comprising interspaces, preferably comprising gas filled interspaces; |
| S6a) | applying the conductive material comprising interspaces, preferably gas filled interspaces, prepared or provided in step S5a) to the catalytic material coating of the laminar electrically conductive material (ECM) coated on a first side with a catalytic material coating resulting in step S4a), so that a gas diffusion electrode (GDE) results; |

or the additional steps:

| | |
|---|---|
| S3b) | preparing or providing a conductive material comprising interspaces, preferably comprising gas filled interspaces; |
| S4b) | applying the conductive material comprising interspaces, preferably gas filled interspaces, prepared or provided in step S3b) to the laminar electrically conductive material (ECM) resulting in step S2) so that a laminar electrically conductive material (ECM) covered with a conductive material comprising interspaces, preferably gas filled interspaces, results; |
| S5b) | preparing or providing a catalytic material, wherein the catalytic material is capable to catalyse oxygen reduction reaction of a gas diffusion electrode; |
| S6b) | applying the catalytic material prepared or provided in step S5b) as a coating to the surface of the conductive material comprising interspaces of the laminar electrically conductive material (ECM) covered with a conductive material comprising interspaces, preferably gas filled interspaces, resulting in step S4b), so that a gas diffusion electrode (GDE) results. |

The term "laminar" in the "laminar electrically conductive material (ECM)" denotes in accordance with the common understanding of the skilled person that the "laminar electrically conductive material (ECM)" is relatively large in two of its dimensions (length and width) and relatively small in the other (thickness).

The conductive material comprising interspaces, preferably comprising gas filled interspaces, is preferably a porous material or a mesh. When a conductive material comprising gas filled interspaces, is preferably a porous material or a mesh.

The term "conductive material comprising interspaces" comprises the term "conductive material comprising gas filled interspaces" and also comprises conductive materials with interspaces that are filled with any other material than gas which is different to said conductive material.

When a porous material comprising gas filled interspaces is for example coated or exposed to liquids, the gas (frequently air) in the interspaces is frequently replaced in parts or total by the coating material and/or the liquid; the result of this is also exemplary encompassed by the term "conductive material comprising interspaces".

The "conductive material comprising interspaces" provides mechanical integrity and stability to the resulting gas diffusion electrode and is in many cases additionally used for current collection.

In some embodiments, the "conductive material comprising interspaces" has an own catalytic activity for the oxygen evolution reaction and/or the oxygen reduction reaction occurring in a metal air battery.

That the electrically conductive powder and the binder are prepared or provided in step S2) in an amount means that the amount is specific and specifically chosen, for example according to a recipe.

With the method of the present invention, bifunctional electrodes are produced in such a way that the catalytic activities for the oxygen evolution reaction (OER), the oxygen reduction reaction (ORR) and/or combinations thereof are favourably advantageous. This has been confirmed by own experimental studies.

With the method of the present invention, bifunctional electrodes are produced in such a way that the catalytic activities for the oxygen evolution reaction (OER), the oxygen reduction reaction (ORR) and/or combinations thereof are advantageous and whereby additionally the surface areas of all catalysts are sufficient for industrial use.

The present invention, with its various aspects, especially and preferably relates to a method (as described above, preferably as identified above as preferred), for producing a gas diffusion electrode (GDE), comprising the following steps:

| | |
|---|---|
| S1) | preparing or providing: |
| | - an amount of an electrically conductive powder |
| | and |
| | - an amount of a binder; |
| S2) | intermixing the amount of electrically conductive powder prepared or provided in step S1) and the amount of binder prepared or provided in step S1) so that a mixture of electrically conductive powder and binder results |
| | and |
| | producing a foil from said mixture, so that a laminar electrically conductive material (ECM) results, preferably comprising a polymeric matrix and, embedded therein, a particulate material; |
| S3a) | preparing or providing a catalytic material, wherein the catalytic material is capable to catalyse oxygen reduction reaction (ORR) of a gas diffusion electrode (GDE); |
| S4a) | coating a first side of the laminar electrically conductive material resulting in step S2), with the catalytic material prepared or provided in step S3a) so that a laminar electrically conductive material (ECM) coated on a first side with a catalytic material coating results; |
| S5a) | preparing or providing a conductive material comprising interspaces, preferably comprising gas filled interspaces; |
| S6a) | applying the conductive material comprising interspaces, preferably gas filled interspaces, prepared or provided in step S5a) to the catalytic material coating of the laminar electrically conductive material (ECM) coated on a first side with a catalytic material coating resulting in step S4a), so that a gas diffusion electrode (GDE) results. |

In many cases, it is preferred that within the resulting gas diffusion electrode (GDE) the catalytic material is situated between the conductive material comprising interspaces and the laminar electrically conductive material (ECM).

In many other cases, it is preferred that within the resulting gas diffusion electrode (GDE) the conductive material comprising interspaces is situated between the catalytic material and the laminar electrically conductive material (ECM).

The present invention, with its various aspects, especially and preferably relates to a method (as described above, preferably as identified above as preferred), for producing a gas diffusion electrode (GDE), comprising the following steps:

| | |
|---|---|
| S1) | preparing or providing: |
| | - an amount of an electrically conductive powder |
| | and |
| | - an amount of a binder; |
| S2) | intermixing the amount of electrically conductive powder prepared or provided in step S1) and the amount of binder prepared or provided in step S1) so that a mixture of electrically conductive powder and binder results |
| | and |
| | producing a foil from said mixture, so that a laminar electrically conductive material (ECM) results, preferably comprising a polymeric matrix and, embedded therein, a particulate material; |
| S3b) | preparing or providing a conductive material comprising interspaces, preferably gas filled interspaces; |
| S4b) | applying the conductive material comprising gas filled interspaces prepared or provided in step S3b) to the laminar electrically conductive material (ECM) resulting in step S2) so that a laminar electrically conductive material (ECM) covered with a conductive material comprising interspaces results; |
| S5b) | preparing or providing a catalytic material, wherein the catalytic material is capable to catalyse oxygen reduction reaction of a gas diffusion electrode; |
| S6b) | applying the catalytic material prepared or provided in step S5b) as a coating to the surface of the conductive material comprising interspaces of the laminar electrically conductive material (ECM) covered with a conductive material comprising interspaces resulting in step S4b), so that a gas diffusion electrode (GDE) results. |

The present invention, with its various aspects, especially and preferably relates to a method (as described above, preferably as identified above as preferred),
- wherein the gas diffusion electrode (GDE) is an oxygen reduction reaction (ORR) electrode and/or
- wherein the gas diffusion electrode (GDE) is a bifunctional electrode; and/or
- wherein the producing of a foil from said mixture, so that a laminar electrically conductive material (ECM) results, comprising a polymeric matrix and, embedded therein, a particulate material in step S2) involves calendering; and/or
- wherein the electrically conductive powder prepared or provided in step S1) at 20°C has an electrical conductivity of 0.01 S/m or higher, preferred of 0.01 S/cm, preferably determined according to section "2.1 Conductivity measurements" from the scientific publication "Electrical conductivity of carbonaceous powders" by the authors A. Celzard, J.F. Marêché, F. Payot and G. Furdin, published in Volume 40, Issue 15 on pages 2801 to 2815 of the scientific journal "Carbon" in 2002 and/or
- wherein the laminar electrically conductive material (ECM) comprising a polymeric matrix and, embedded therein, a particulate material resulting in step S2) is an electrochemically conductive material.

In many cases, producing the foil in step S2) of the method according to the present invention by means of calendering is an especially efficient way of carrying out the method according to the present invention and in many cases leads to foils that possess especially positive properties within the scope of the present invention.

In many cases it is preferred that the electrically conductive powder prepared or provided in step S1) at 20°C has an electrical conductivity of 0.01 S/m or higher, preferred of 0.01 S/cm, preferably determined according to section "2.1 Conductivity measurements" from the scientific publication "Electrical conductivity of carbonaceous powders" by the authors A. Celzard, J.F. Marêché, F. Payot and G. Furdin, published in Volume 40, Issue 15 on pages 2801 to 2815 of the scientific journal "Carbon" in 2002 at a pressure of 124 kPa as described; with such electrically conductive powders especially positive results can be obtained for the properties of the laminar electrically conductive material (ECM) comprising a polymeric matrix and, embedded therein, a particulate material resulting in step S2).

The term "electrically conductive material" and/or the abbreviation "ECM" comprises an electrochemically conductive material.

The term "foil" preferably refers to a laminar material, in accordance with the usual understanding of the skilled person.

In many cases, it is preferred that the laminar electrically conductive material (ECM) is a laminar electrochemically conductive material (ECM).

In many cases, it is preferred that the laminar electrically conductive material (ECM) comprising a polymeric matrix and, embedded therein a particulate material is a laminar electochemically conductive material (ECM) comprising a polymeric matrix and, embedded therein a particulate material.

In many cases the gas diffusion electrode resulting from carrying out the method of the present invention is preferably an oxygen reduction reaction (ORR) electrode, thus preferably an electrode with sufficiently good capability to catalyse the oxygen reduction reaction in a metal air battery but insufficient ability to catalyse the oxygen evolution reaction in a metal air battery.

In many cases the gas diffusion electrode resulting from carrying out the method of the present invention is preferably a bifunctional electrode, thus preferably an electrode with sufficiently good capability to catalyse both, the oxygen reduction reaction in a metal air battery and the oxygen evolution reaction in a metal air battery.

With the method of the present invention, the effects and advantages of the present invention are achieved for both types of electrodes.

The present invention, with its various aspects, especially and preferably relates to a method (as described above, preferably as identified above as preferred), wherein the conductive material comprising interspaces, preferably gas filled interspaces, prepared or provided in step S5a) or step S3b) is selected from the group consisting of:
- metallic mesh, preferably metallic mesh wherein the surface of the metallic mesh is capable to catalyse the oxygen evolution reaction (OER) and/or the oxygen reduction reaction (ORR) of a gas diffusion electrode;
- metallic mesh at least partially coated, preferably fully coated, with a catalytic material, wherein preferably the surface of the catalytic material is capable to catalyse the oxygen evolution reaction (OER) and/or the oxygen reduction reaction (ORR) of a gas diffusion electrode;
- metallic foam, preferably metallic foam wherein the surface of the metallic foam is capable to catalyse the oxygen evolution reaction (OER) and/or the oxygen reduction reaction (ORR) of a gas diffusion electrode;
   and
- metallic foam at least partially coated, preferably fully coated, with a catalytic material, wherein preferably the surface of the catalytic material is capable to catalyse the oxygen evolution reaction (OER) and/or the oxygen reduction reaction (ORR) of a gas diffusion electrode.

The conductive material comprising interspaces, preferably gas filled interspaces, provides mechanical integrity/stablity and can be used for current collection.

In many cases, the conductive material comprising interspaces, preferably gas filled interspaces, itself has a catalytic activity for the oxygen evolution reaction (OER) and/or the oxygen reduction reaction (ORR). In many cases it is favourable to select the material and structure of the conductive material comprising interspaces, preferably gas filled interspaces, in accordance with its mechanical properties rather than its catalytic properties; in such cases it is frequently preferred that the conductive material comprising interspaces, preferably gas filled interspaces, is coated with a catalytic material capable to catalyse the oxygen evolution reaction (OER) and/or the oxygen reduction reaction (ORR) of a gas diffusion electrode.

Preferably, a catalyst capable to catalyse the oxygen evolution reaction (OER) and/or the oxygen reduction reaction (ORR) is capable to catalyse said reaction sufficiently well for industrial requirements during use in metal air batteries.

The present invention, with its various aspects, especially and preferably relates to a method (as described above, preferably as identified above as preferred),
- comprising the following additional steps after the gas diffusion electrode results in step S6a) or after the gas diffusion electrode results in step S6b):

| | |
|---|---|
| S7a) | preparing or providing a hydrophobic gas-permeable sheet (HGPS); |
| S8a) | contacting connecting of the second side (the side facing away from the catalytic material) |
| | - of the gas diffusion electrode resulting in step S6a) |
| | or |
| | - of the gas diffusion electrode resulting in step S6b) |
| | with the hydrophobic gas-permeable sheet (HGPS) prepared or provided in step S7) so that a gas diffusion electrode contacted with a hydrophobic gas-permeable sheet (HGPS) results; |
| S9a) | pressing together the gas diffusion electrode contacted with a hydrophobic gas-permeable sheet (HGPS) resulting in step S8a) |
| | with a pressure of at least 0.005 tonnes/cm², so that a leak proof gas diffusion electrode (GDE) results. |

In many cases it is preferred that the contacting connecting in step S8a) comprises is a lamination step.

Carrying out the method of the present invention including the above-defined steps S7a), S8a) and S9a), a favourably positive combination of positively high gas permeability and simultaneously a positively low permeability for aqueous electrolyte solutions is achieved in the resulting gas diffusion electrodes. The resulting gas diffusion electrodes are leakproof and are in many cases used to produce leakproof metal air batteries.

The term "gas diffusion electrode" or "GDE" encompasses gas diffusion electrodes (GDEs) that are leak proof (for example gas diffusion electrodes with a hydrophobic gas-permeable sheet) and gas diffusion electrodes that are not (for example some gas diffusion electrodes without a hydrophobic gas-permeable sheet).

The further effects and advantages described herein with regard to different aspects of the present invention are also achieved. This has been confirmed in own experimental studies.

The present invention, with its various aspects, especially and preferably relates to a method (as described above, preferably as identified above as preferred),
- wherein the electrically conductive powder prepared or provided in Step S1) is selected from the group consisting of:
   - carbonaceous powder, preferably a carbonaceous powder with a specific surface area greater than 100 m²/g,
   - nickel powder
      and
   - combinations thereof;

   wherein preferably the carbonaceous powder, more preferably the carbonaceous powder with a specific surface area greater than 100 m²/g, is selected from the group consisting of:
      - activated carbon,
      - graphite,
      - carbon black, preferably carbon black in an amount of 50 wt.-% or more with respect to the total mass of the electrically conductive powder prepared or provided in Step S1)
      - carbon nanotube,
      - graphene,
         and
      - combinations thereof
   wherein preferably the specific surface area is determined using the Brunauer-Emmett- Teller theory (BET) following the procedure in the scientific publication "Experimental methods in chemical engineering: specific surface area and pore size distribution measurements-BET, BJH, and DFT" by the authors R. Bardestani, G. S. Patience and S. Kaliaguine, published in Volume 97, on pages 2781 to 2791 of the scientific journal "The Canadian Journal of Chemical Engineering" in 2019;
      and/or
- wherein the binder prepared or provided in Step S1) is selected from the group consisting of:
   - fluorinated polymer, preferably fluorinated polymer selected from the group consisting of:
      - polytetrafluoroethylene (PTFE)
      - polyvinylidene fluoride (PVDF)
      - fluorinated ethylene-propylene (FEP)
      - ethylenetetrafluoroethylene (ETFE)
      - tetrafluoroethylene-perfluoro-3,6-dioxa-4-methyl-7-octenesulfonic acid copolymer (Nation)
      - polymeric ionomer composed from sulfonated polyetheretherketon (Fumion)
         and
      - combinations thereof;
preferably the fluorinated polymer is polytetrafluoroethylene (PTFE).

In many cases it is preferred that the electrically conductive powder is a carbonaceous powder and does not contain nickel. However in other cases it is preferred that nickel powder is used together with carbonaceous powder as the electrically conductive powder.

When carbon black is used, mean particle diameters in the range of from 3 nm to 30 nm are preferred, determined from scanning electron microscopy (SEM) images using data from the determination of at least 100 individual particles.

When activated carbon is used, mean particle diameters in the range of from 10 µm to 30 µm are preferred, determined from scanning electron microscopy (SEM) images using data from the determination of at least 100 individual particles.

In many cases, (hydrophilic) binders with insufficiently low alkaline resistivity are not suitable, due to degradation of the binder in alkaline environment frequently present in metal air batteries and resulting insufficient resistance to flooding of battery cells made with gas diffusion electrodes comprising such binders. A binder is sufficiently alkaline resistant if it can be used in the method of the present invention to produce a gas diffusion electrode that is leakproof for the time of usage in a metal air battery and does not cause inacceptable leakage before it needs to be replaced for other reasons.

Polytetrafluoroethylene (PTFE) is used for a porosity controllable hydrophobic layer formation. The hydrophobic nature of PTFE ensures efficient gas diffusion and water management within the gas diffusion electrode. This is particularly important in metal-air batteries, where oxygen needs to efficiently reach the catalytic sites for the oxygen reduction reaction (ORR). Additionally, PTFE imparts mechanical strength and durability to the gas diffusion electrode, ensuring longevity and consistent performance under various operational conditions.

The further effects and advantages described herein with regard to different aspects of the present invention are also achieved. This has been confirmed in own experimental studies.

The present invention, with its various aspects, especially and preferably relates to a method (as described above, preferably as identified above as preferred),
- wherein
   - the gas diffusion electrode (GDE) comprises a hydrophobic gas-permeable sheet (HGPS)
      and
      the ratio of the total mass of
         - the amount of electrically conductive powder prepared or provided in step S1) and present during the intermixing in step S2)
            to
         - the amount of binder prepared or provided in step S1) and present during the intermixing in step S2)
      is in the range of from 61:39 to 90:10, preferably in the range of from 70:30 to 85:15.

Gas diffusion electrodes (GDE) produced by the method of the present invention with these ratios of electrically conductive powder to binder are not sufficiently leakproof without an additional hydrophobic gas-permeable sheet (HGPS) but possess a favourably high electrical conductivity. Especially favourable combinations of low permeability of the gas diffusion electrode for aqueous electrolyte solutions / water and high electrical conductivity of the overall electrode are achieved with this combination. This has been confirmed in own experiments.

The present invention, with its various aspects, especially and preferably relates to a method (as described above, preferably as identified above as preferred),
- wherein
   - the gas diffusion electrode (GDE) does not comprise a hydrophobic gas-permeable sheet (HGPS)
      and
      the ratio of the total mass of
         - the amount of electrically conductive powder prepared or provided in step S1) and present during the intermixing in step S2)
            to
         - the amount of binder prepared or provided in step S1) and present during the intermixing in step S2)
      is in the range of from 60:40 to 40:60.

Gas diffusion electrodes (GDE) produced by the method of the present invention with these ratios of electrically conductive powder to binder are sufficiently leakproof even without a hydrophobic gas-permeable sheet (HGPS). Carrying out the method of the present invention with these ratios allows the production of leakproof gas diffusion electrodes with favourably few production steps in a favourably fast manner with favourably low energy consumption. This has been confirmed in own experiments.

The present invention, with its various aspects, especially and preferably relates to a method (as described above, preferably as identified above as preferred),
- wherein the laminar electrically conductive material (ECM) resulting in step S2) has a thickness in the range of from 400 µm to 1000 µm, preferably in the range of from 500 µm to 900 µm, more preferably in the range of from 550 µm to 800 µm;
   and/or, preferably "and"
- wherein the electrically conductive material (ECM) resulting in Step S2) has an electrical conductivity at 20 °C of 1·10⁻⁶ S/m or higher, preferably 5·10⁻⁶ S/m or higher, more preferably 1·10⁻⁵ S/m or higher;
   and/or, preferably "and"
- wherein the electrically conductive material (ECM) resulting in Step S2) has an electrical conductivity at 20 °C of 1·10⁻⁶ S/cm or higher, preferably 5·10⁻⁶ S/cm or higher, more preferably 1·10⁻⁵ S/cm or higher;
   and/or, preferably "and"
- wherein during the intermixing in step S2) agglomeration occurs;
   and/or, preferably "and"
- wherein
   - the coating of the catalytic material prepared or provided in step S3a) onto the first side of the laminar electrically conductive material resulting in step S2) in step S4a)
      or
   - the applying of the catalytic material prepared or provided in step S5b) as a coating to the surface of the conductive material comprising interspaces, preferably gas filled interspaces, in step S6b)
   is carried out using one, two or more of the methods, preferably one of the methods, selected from the group consisting of:
   - drop casting,
   - slurry coating and subsequent blading,
   - brushing
   - calendering
      and
   - spray coating.

The thickness of the laminar electrically conductive material (ECM) in the range of from 400 µm to 1000 µm, preferably in the range of from 500 µm to 900 µm, more preferably in the range of from 550 µm to 800 µm is preferred in many cases as it results in a favourably good combination of properties, namely good mechanical stability, good conductivity and good permeability for oxygen.

An electrically conductive material (ECM) resulting with an electrical conductivity at 20 °C of S/m or higher, preferably 5·10⁻⁶ S/m or higher, more preferably 1·10⁻⁵ S/m or higher is preferred in many cases as the conductive properties of the resulting gas diffusion electrodes are favourably good, also, an equal current distribution is in many cases easier achieved with an electrically conductive material (ECM) with the above electrical conductivity.

An electrically conductive material (ECM) resulting with an electrical conductivity at 20 °C of 1 ·10⁻⁶ S/cm or higher, preferably 5·10⁻⁶ S/cm or higher, more preferably 1·10⁻⁵ S/cm or higher is preferred in many cases as the conductive properties of the resulting gas diffusion electrodes are favourably good, also, an equal current distribution is in many cases easier achieved with an electrically conductive material (ECM) with the above electrical conductivity.

The present invention, with its various aspects, especially and preferably relates to a method (as described above, preferably as identified above as preferred),
- wherein
   - the coating of the catalytic material prepared or provided in step S3a) onto the first side of the laminar electrically conductive material resulting in step S2) in step S4a)
   is carried out using one, two or more of the methods, preferably one of the methods, selected from the group consisting of:
   - drop casting,
   - slurry coating and subsequent blading,
   - brushing
   - calendering
      and
   - spray coating.

Carrying out the method according to the present invention utilizing the above methods, leads to an especially favourable spatially uniform distribution of catalytic material on the surface of the resulting gas diffusion electrode. In many cases, this spatially uniform distribution of catalytic material on the surface of the resulting gas diffusion electrode results in a favourably uniform current collection from the surface of the gas diffusion electrode. This has been confirmed in own experiments.

Here, the effects and advantages of the present invention are achieved in an especially favourable combination.

The present invention, with its various aspects, especially and preferably relates to a method (as described above, preferably as identified above as preferred),
- wherein
   - the applying of the catalytic material prepared or provided in step S5b) as a coating to the surface of the conductive material comprising interspaces, preferably gas filled interspaces, in step S6b)
   is carried out using one, two or more of the methods, preferably one of the methods, selected from the group consisting of:
   - drop casting,
   - slurry coating and subsequent blading,
   - brushing
   - calendering
      and
   - spray coating.

The above-described effects and advantages apply also here.

The present invention, with its various aspects, especially and preferably relates to a method (as described above, preferably as identified above as preferred),
- wherein
   - the catalytic material prepared or provided in step S3a)
      or
   - the catalytic material prepared or provided in step S5b) is selected from the group of catalytic materials consisting of:
   - carbonaceous substances,
      preferably
      - activated carbon,
      - carbon black,
      - graphene,
      - carbon nanotubes
      - graphite
      and/or
      - mixtures thereof;
   - carbonaceous substances doped with heteroatoms,
      - whereby the carbonaceous substances are preferably selected from the group consisting of:
      - activated carbon,
      - carbon black,
      - graphene,
      - carbon nanotubes
      - graphite
         and/or
      - mixtures thereof;
      and
   - whereby the heteroatoms are preferably selected from the group consisting of:
      - nitrogen (N),
      - sulphur (S),
      - boron (B)
         and
      - phosphorus (P);
- metals, preferably selected from the group consisting of:
   Pt, Pd, Ir, Ag, K, Bi, Ce, La, Ni, Fe, Co, Cr, Cu, Zn, Mo, Zr, Mn, and Ba;
- oxides, preferably oxides produced by electrodeposition, of metals selected from the group consisting of:
   Bi, Ce, La, Ni, Fe, Co, Cr, Cu, Zn, Mo, Zr, Mn and combinations thereof;
      and/or
   oxy-hydroxides of metals selected from the group consisting of: Bi, Ce, La, Ni, Fe, Co, Cr, Cu, Zn, Mo, Zr, Mn and combinations thereof;
- sulphides, preferably sulphides produced by electrodeposition,
- phosphides, preferably phosphides produced by electrodeposition,
- nitrides,
   - double perovskite oxides,
- high entropy perovskite oxides,
   preferably high entropy perovskite oxide powder, comprising the metals La, Fe, Co, Mn, Cr and Zn;
   and more preferably,
   wherein the mass fraction of each metal selected from the group consisting of Fe, Co, Mn, Cr and Zn is in the range of 0.05 to 0.40, with respect to the total mass of the high entropy perovskite oxide powder;
   and/or
- high entropy oxides, preferably high entropy oxides produced by the sol-gel-method, of any combination of any of the metals selected from the group consisting of:
   Ni, Fe, Co, Cr, Cu, Zn, Mo, Zr, and Mn.

In many cases, it is preferred that the catalytic material is selected from the group of materials comprising: silver, palladium, platinum, manganese oxide (MnO₂, Mn₂O₃, Mn₃O₄, MnₓO_{y} (where x = 1 to 3 and y = 1 to 8)), nickel-doped manganese oxide (Ni-MnₓO_{y}), nickel oxide (NiOₓ), nickel oxyhydroxide (NiOₓ(OH)_{y}), iron oxide (FeOₓ), iron oxyhydroxide (FeOₓ(OH)_{y} (where x = 0 to 2 and y = 0 to 3)), cobalt oxide (CO₃O₄, CoₓO_{y} (where x = 1 to 3 and y = 1 to 8)), manganese cobalt oxide (MnCo₂O₄, Mn₁₊ₓCo₂₋ₓO₄ (where x = 0 to 2)), cobalt manganese oxide (CoMn₂O₄), nickel manganese oxide (NiMnOₓ (where x = 2 to 4)), manganese iron oxide (MnFe₂O₄, Mn₁₊ₓFe₂₋ₓO₄ (where x = 0 to 1)), nickel-doped manganese oxide (Ni-MnₓO_{y} (where x = 1 to 3 and y = 1 to 8)), manganese cobalt iron oxide (MnₓCo_{y}Fe_{z}O₄ (where x = 0 to 4 and y = 0 to 4 and z = 0 to 4)), zinc cobalt manganese oxide (ZnCoMnO₄, ZnₓCo_{y}Mn_{z}O₄ (where x = 0 to 4 and y = 0 to 4 and z = 0 to 4)), cobalt nickel oxide (CoNiOₓ (where x = 0 to 4)), calcium manganese oxide (CaMnOₓ (where x = 0 to 4)), lanthanum manganese oxide (LaMnO), lanthanum cobalt oxide (LaCo₂O₄, La₁₊ₓCo₂₋ₓO₄ (where x = 0 to 2), lanthanum nickel oxide (LaNiO₃), lanthanum calcium aluminum manganese oxide (LaₓCa_{y}Al_{z}Mnᵥ (where x = 0 to 3 and y = 0 to 3 and z = 0 to 2 and v = 0 to 3)), nickel iron oxide (Ni_{z}Fe_{1-z}Oₓ (where z = 0 to 1 and x = 0.5 to 2.5)), manganese ferrite (MnFe₂O₄), zinc ferrite (ZnFe₂O₄), nickel cobaltite (NiCo₂O₄), lanthanum strontium manganate (La_{0.8}Sr_{0.2}MnO₃), other transition metal oxides or nitrides, metallic nickel, metallic iron, or any combinations thereof. Transition metal nitrides such as Fe₃N, FeCN, ZrN, Mn₄N, or combinations thereof.

Catalytic materials selected from the group of catalytic materials consisting of:
- metals, preferably selected from the group consisting of:
   Pt, Pd, Ir, Ag, K, Bi, Ce, La, Ni, Fe, Co, Cr, Cu, Zn, Mo, Zr, Mn, and Ba;
- oxides, preferably oxides produced by electrodeposition, of metals selected from the group consisting of:
   Bi, Ce, La, Ni, Fe, Co, Cr, Cu, Zn, Mo, Zr, Mn and combinations thereof;
      and/or
   oxy-hydroxides of metals selected from the group consisting of: Bi, Ce, La, Ni, Fe, Co, Cr, Cu, Zn, Mo, Zr, Mn and combinations thereof;
   are suitable catalytic materials or use as
   - ORR catalyst (catalyst catalysing the oxygen reduction reaction of a metal air battery)
      and
   - OER catalyst (catalyst catalysing the oxygen evolution reaction of a metal air battery).

Consequently, they are also suitable catalysts for bifunctional gas diffusion electrodes. Their use in the method of the current invention and the resulting gas diffusion electrodes is in many cases preferred.

Catalytic materials selected from the group of catalytic materials consisting of:
- carbonaceous substances,
   preferably
   - activated carbon,
   - carbon black,
   - graphene,
   - carbon nanotubes
   - graphite
   and/or
   - mixtures thereof;
- carbonaceous substances doped with heteroatoms,
   - whereby the carbonaceous substances are preferably selected from the group consisting of:
      - activated carbon,
      - carbon black,
      - graphene,
      - carbon nanotubes
      - graphite
         and/or
      - mixtures thereof;
      and

   - whereby the heteroatoms are preferably selected from the group consisting of:
      - nitrogen (N),
      - sulphur (S),
      - boron (B)
         and
      - phosphorus (P);
   are suitable catalytic materials for use as
   - ORR catalyst (catalyst catalysing the oxygen reduction reaction of a metal air battery)
      and
   - bifunctional catalyst (catalyst catalysing the oxygen evolution reaction of a metal air battery).

Their ability to catalyse the OER reaction (oxygen evolution reaction of a metal air battery) is in many cases not pronounced enough. Thus, if these catalytic materials are used in a bifunctional gas diffusion electrode (GDE) it is in many cases preferred to use an additional catalyst for the OER reaction in the same bifunctional gas diffusion electrode.

The above materials can also be part of the laminar electrically conductive material but additional catalyst is then used for catalysing the OER reaction and/or for catalysing the ORR reaction.

Catalytic materials selected from the group of catalytic materials consisting of:
- sulphides, preferably sulphides produced by electrodeposition,
- phosphides, preferably phosphides produced by electrodeposition,
- nitrides,
are suitable catalytic materials or use as OER catalyst, preferably as coating on the conductive material comprising interspaces in bifunctional electrodes.

The atoms of La, Sr, Nd and Ba are "A" sites of HEPO, responsible for perovskite structure formation according to the Goldschmidt tolerance factor. These elements are not active either for catalysing either of the oxygen evolution reaction (OER) or the oxygen reduction reaction (ORR), but necessary to form the perovskite structure which results in long term stability of the resulting gas diffusion electrodes during electrochemical reactions.

Here, preferably La has +3 oxidation state, Sr has +2 oxidation state, Ba has +2 oxidation state, Nd has +2, +3 and +4 oxidation state. By alternating oxidation state of A-site element, according to Goldschmidt tolerance factor, oxidation state of "B" site elements are manipulated, which are responsible for catalysing OER and ORR.

The atoms of Fe, Co, Ni and Mn are "B" sites of HEPO, active for catalysing OER and ORR. These transition metals form an oxide structure in the perovskite structure. These elements are known to have good corrosion resistance which is crucial under extreme electrochemical conditions. They form layer by layer oxide structures. These multi-layer structure brings about a higher oxidation state than their counterpart conventional oxides. Typically, oxides with high oxidation state are preferred in the catalytic applications (catalysis of OER and ORR) since higher oxidation states yield electron transfer reactions faster. In addition, if a higher oxidation state is not achieved, oxygen vacancy formation in the oxide structure results in keeping the charge balance of the perovskite structure according to Goldschmidt tolerance factor. Oxygen vacancies create extra sites for OH absorption during OER and facilitates electron transfer during ORR.

The atoms of Cu, Sn, Al, Mg and Zn are "B" sites of HEPO, increasing the entropy of the structure and increasing mechanical stability. High entropy perovskite oxide structures yield long term structural stability and thus electrochemical stability. Here 5 elements are required to form a high entropy structure. Typically, Fe, Co, Ni and Mn are active for OER and ORR. The additional 5th element forms the high entropy structure and also should not prevent the conductivity. The options are according to enthalpy theory Cu, Sn, Al, Mg and Zn. This has been confirmed in own experiments.

Deposited Ni foam, Ni, Co, Fe, Mn and Oxy-hydroxides thereof provide mechanical stability to the gas diffusion electrode and catalyse OER. Fabrication of the catalysts is achieved directly on a cathode substrate through a one-step deposition method without the use of binder (in many cases the use of binder is not preferred). Electrodeposition of Ni, Co, Fe, Mn catalysts on a Nickel foam yields mechanical stability, higher electrocatalytic activity due to enhancement in the electronic conductivity. In addition, with this method oxyhydroxide structures of the above metals are obtained, which is beneficial for catalysing the OER.

Metal-Nitrogen-Carbon (ZIF-8 derived Fe-N-C) is an active ORR catalyst. ZIF (Zeolite Imidazolate Framework) is preferably used as a catalyst precursor, with the aim to increase the density of atomically-dispersed M-Nx/C active sites, preventing agglomeration of the metal into catalytically-inactive particles. ZIF-8 is used as precursor to give favourable properties in terms of activity and durability in ORR catalysis. Their extended durability in alkaline media increase their effectiveness in metal air batteries for prolonged cycling.

Metal phthalocyanine are active ORR catalysts. Metal phthalocyanine materials are preferred for ORR electrocatalysis in alkaline media due to their excellent electrocatalytic performance and stability. The incorporation of metal phthalocyanines into carbon materials or forming 2D phthalocyanine metal-organic frameworks enhances the catalytic activity for the oxygen reduction reaction (ORR). These modifications improve electron transfer, increase active sites, and facilitate the oxygen reduction reaction (ORR).

Functionalized Carbon, especially nitrogen doped carbon, assists overall electrical conductivity and are ORR catalysts. Nitrogen-doped carbon materials are highly effective for oxygen reduction reaction (ORR) catalysis in alkaline media. These materials benefit from the nitrogen doping, which enhances their electrocatalytic properties, especially for ORR. The presence of nitrogen in the carbon matrix improves the electronic structure, facilitating a more efficient catalytic process. Therefore, carbonaceous materials used in the method of the present invention are in many cases preferably modified with nitrogen doping treatment to yield a catalytically active and more conductive network under the catalyst layer.

The present invention, with its various aspects, especially and preferably relates to a method (as described above, preferably as identified above as preferred),
- wherein
   - the catalytic material prepared or provided in step S3a)
      or
   - the catalytic material prepared or provided in step S5b)
   is prepared or provided as a catalyst slurry, preferably as a catalyst ink;
   and/or
- wherein
   - the catalytic material prepared or provided in step S3a)
      or
   - the catalytic material prepared or provided in step S5b) comprises:
      - an electrocatalyst material
      - a binder and, preferred,
      - a conductive material
   preferably, wherein the catalytic material prepared or provided in step S3) consists of:
   - an electrocatalyst material, preferably in a mass fraction of from 0.4 to 0.6 with regard to the total mass of the catalytic material,
   - a binder, preferably in a mass fraction of from 0.2 to 0.3 with regard to the total mass of the catalytic material,
      and
   - a conductive material, preferably in a mass fraction of from 0.1 to 0.4 with regard to the total mass of the catalytic material;
      and/or
- wherein
   - the catalytic material prepared or provided in step S3a)
      or
   - the catalytic material prepared or provided in step S5b)
   has an electrical conductivity at 20°C of 1·10⁻⁶ S/m or higher, preferably of 5·10⁻⁴ S/m or higher, more preferably of 1·10⁻³ S/m or higher;
   and/or
- wherein
   - the catalytic material prepared or provided in step S3a)
      or
   - the catalytic material prepared or provided in step S5b)
      has an electrical conductivity at 20°C of S/cm or higher, preferably of 5·10⁻⁴ S/cm or higher, more preferably of 1·10⁻³ S/cm or higher;
      and/or
- wherein
   - the catalytic material coating on the first side of the laminar electrically conductive material (ECM), resulting in step S4a)
      or
   - the catalytic material coating on the surface of the conductive material comprising interspaces, preferably gas filled interspaces, in step S6b)
   has a thickness of less than 100 µm, preferably less than 90 µm, more preferably less than 80 µm.

The thickness in the micrometer range is determined using light microscopy.

The present invention, with its various aspects, especially and preferably relates to a method (as described above, preferably as identified above as preferred),
- wherein
   - the catalytic material coating on the first side of the laminar electrically conductive material (ECM), resulting in step S4a)
      has a thickness of less than 100 µm, preferably less than 90 µm, more preferably less than 80 µm.

The present invention, with its various aspects, especially and preferably relates to a method (as described above, preferably as identified above as preferred),
- wherein
   - the catalytic material coating on the surface of the conductive material comprising interspaces, preferably gas filled interspaces, in step S6b)
has a thickness of less than 100 µm, preferably less than 90 µm, more preferably less than 80 µm.

Gas diffusion electrodes (GDE), especially oxygen reduction reaction electrodes (ORR electrodes) and bifunctional electrodes, from the state of the art frequently suffer from unequal current distribution. The uniform thickness of the catalytic material coating resulting in the gas diffusion electrodes (GDEs) prepared with the method of the current invention contributes to an equal current distribution.

The present invention, with its various aspects, especially and preferably relates to a method (as described above, preferably as identified above as preferred),
- wherein
   - the catalytic material prepared or provided in step S3a)
      or
   - the catalytic material prepared or provided in step S5b) is selected from the group of catalytic materials consisting of:
   - carbonaceous substances,
      preferably
      - activated carbon,
      - carbon black,
      - graphene,
      - carbon nanotubes
      - graphite
      and/or
      - mixtures thereof;
   - carbonaceous substances doped with heteroatoms,
      - whereby the carbonaceous substances are preferably selected from the group consisting of:
         - activated carbon,
         - carbon black,
         - graphene,
         - carbon nanotubes
         - graphite
            and/or
         - mixtures thereof;
            and
      - whereby the heteroatoms are preferably selected from the group consisting of:
         - nitrogen (N),
         - sulphur (S),
         - boron (B)
            and
         - phosphorus (P);
            and is treated
   - with CO₂ or water steam at a temperature in the range of from 600 °C to 1000 °C;
      or
   - with a gas-mixture essentially consisting of Ar and H₂, preferably 95 vol.-% Ar and 5 vol.-% H₂, at a temperature in the range of from 600 °C to 1000 °C;
      or
   - with NH₃ at a temperature in the range of from 600 °C to 1000 °C.

The treatment of the selected catalytic materials with NH₃ at a temperature in the range of from 600 °C to 1000 °C results in N-doped catalysts and is in many cases preferred.

The present invention, with its various aspects, especially and preferably relates to a method (as described above, preferably as identified above as preferred),
- wherein the hydrophobic gas-permeable sheet (HGPS) has a thickness in the range of from 20 µm to 250 µm, preferably in the range of from 65 µm to 180 µm, more preferably in the range of from 80 µm to 150 µm;
   and/or
- wherein the hydrophobic gas-permeable sheet (HGPS) has a porosity in the range of from 50 % to 90 %, preferably in the range of from 55 % to 85 %, more preferably in the range of from 60 % to 80 %;
   and/or
- wherein the hydrophobic gas-permeable sheet (HGPS) has a waterproofness pressure in the range of from 80 kPa to 120 kPa, preferably in the range of from 85 kPa to 115 kPa, more preferably in the range of from 90 kPa to 110 kPa.

Here, the effects and advantages of the present invention are achieved in an especially favourable combination.

The present invention, with its various aspects, especially and preferably relates to a method (as described above, preferably as identified above as preferred), wherein the catalytic material in step S3a) or in step S5b) is prepared in a method comprising the following steps:

| | |
|---|---|
| SC-1) | preparing or providing: |
| | - an amount of a catalytic material powder |
| | and |
| | - an amount of binder; |
| SC-2) | intermixing the amount of catalytic material powder, prepared or provided in step SC-1) and the amount of binder prepared or provided in step SC-1) so that a mixture of catalytic material powder and binder results |
| | and |
| | producing a foil from said mixture for coating a first side of a laminar electrically conductive material so that a laminar electrically conductive material (ECM) coated on a first side with a catalytic material coating results. |

Such a method is in many cases advantageous because with said method in many cases, a favourably thick catalytic material coating and/or a favourably high catalyst loading in the catalytic material coating is achieved.

The present invention, with its various aspects, especially and preferably relates to a method (as described above, preferably as identified above as preferred), wherein in step SC-1) additionally an amount of a conductive powder, preferably an electrically conductive powder, is prepared or provided and wherein said amount of conductive powder, preferably electrically conductive powder, is additionally present during the intermixing in step SC-2) and is present in the mixture from which the foil is formed in Step SC-2).

Such a method is in many cases advantageous, because the electrical conductivity of the catalytic material coating is in many cases favourably affected when carrying out said method; other advantages associated with the catalytic material coating and the foil are also achieved here.

The invention also relates to a gas diffusion electrode, preferably gas diffusion electrode producible or produced in a method as described above, more preferably in a method as identified above as preferred, wherein the gas diffusion electrode comprises at least:
a) a distinct layer, as electrically conductive layer, comprising an electrically conductive powder and a binder (103, 203);
b) a further distinct layer, as layer comprising a continuous conductive material comprising interspaces filled with a different material (102, 201)
c) a further distinct layer comprising a catalytic material, as layer comprising a catalytic material, wherein the catalytic material is capable to catalyse oxygen reduction reaction (ORR) of a gas diffusion electrode (101, 202).

Gas diffusion electrodes according to the present invention have especially positive combinations of favourably high mechanical stability, favourable good mechanical flexibility. This has been found in own experimental studies.

The effects and advantages set out above in connection with the method according to the present invention are achieved with the gas diffusion electrode (GDE) of the present invention in an especially positive manner.

The present invention, with its various aspects, especially and preferably relates to a gas diffusion electrode (as described above, preferably as identified above as preferred),
- wherein the gas diffusion electrode (GDE) is an oxygen reduction reaction (ORR) electrode
   and/or
- wherein the gas diffusion electrode (GDE) is a bifunctional electrode.

The effects and advantages set out above in connection with the method according to the present invention apply.

The present invention, with its various aspects, especially and preferably relates to a gas diffusion electrode (as described above, preferably as identified above as preferred),
wherein the layer comprising a continuous conductive material comprising interspaces filled with a different material comprises:
- a metallic mesh, preferably a metallic mesh wherein the surface of the metallic mesh is able to catalyse the oxygen evolution reaction (OER) and/or the oxygen reduction reaction (ORR) of a gas diffusion electrode;
- a metallic mesh at least partially coated, preferably fully coated, with a catalytic material, wherein preferably the surface of the catalytic material is able to catalyse the oxygen evolution reaction (OER) and/or the oxygen reduction reaction (ORR) of a gas diffusion electrode;
- a metallic foam, preferably a metallic foam wherein the surface of the metallic foam is able to catalyse the oxygen evolution reaction (OER) and/or the oxygen reduction reaction (ORR) of a gas diffusion electrode;
   and
- a metallic foam at least partially coated, preferably fully coated, with a catalytic material, wherein preferably the surface of the catalytic material is able to catalyse the oxygen evolution reaction (OER) and/or the oxygen reduction reaction (ORR) of a gas diffusion electrode.

The effects and advantages set out above in connection with the method according to the present invention apply.

The present invention, with its various aspects, especially and preferably relates to a gas diffusion electrode (as described above, preferably as identified above as preferred),
wherein the gas diffusion electrode (GDE) further comprises:
d) a hydrophobic gas-permeable sheet (HGPS), as a further distinct layer, preferably with the hydrophobic gas-permeable sheet (HGPS) being an outermost layer (from the air side) of the gas diffusion electrode (GDE).

The effects and advantages set out above in connection with the method according to the present invention apply.

The present invention, with its various aspects, especially and preferably relates to a gas diffusion electrode (as described above, preferably as identified above as preferred),
wherein
the electrically conductive powder of the distinct layer, as electrically conductive layer, comprising an electrically conductive powder and a binder, is selected from the group consisting of:
- carbonaceous powder
- nickel powder
   and
- combinations thereof
wherein preferably the carbonaceous powder is selected from the group consisting of:
- activated carbon,
- graphite,
- carbon black, preferably carbon black in an amount of 50 wt.-% or more with respect to the total mass of the electrically conductive powder present in the electrically conductive layer,
- carbon nanotube,
- graphene,
   and
- combinations thereof;
   and/or
- wherein the binder of the distinct layer, as electrically conductive layer, comprising an electrically conductive powder and a binder, is essentially, preferred is, a fluorinated polymer;
   preferably a fluorinated polymer selected from the group consisting of:
      - polytetrafluoroethylene (PTFE)
      - polyvinylidene fluoride (PVDF)
      - fluorinated ethylene-propylene (FEP)
      - ethylenetetrafluoroethylene (ETFE)
      - tetrafluoroethylene-perfluoro-3,6-dioxa-4-methyl-7-octenesulfonic acid copolymer (Nation)
      - polymeric ionomer composed from sulfonated polyether-etherketon (Fumion)
         and
      - combinations thereof;
   more preferably the fluorinated polymer is polytetrafluoroethylene (PTFE).

The effects and advantages set out above in connection with the method according to the present invention apply.

The present invention, with its various aspects, especially and preferably relates to a gas diffusion electrode (as described above, preferably as identified above as preferred),
- wherein
   - the gas diffusion electrode (GDE) comprises, as a distinct layer, a hydrophobic gas-permeable sheet (HGPS)
      and
      wherein within the electrically conductive layer, comprising an electrically conductive powder and a binder,
      the ratio of
         - the total mass of electrically conductive powder present in the electrically conductive layer
            to
         - the total mass of binder present in the electrically conductive layer
      is in the range of from 61:39 to 90:10, preferably in the range of from 70:30 to 85:15;
         or
   - wherein
   - the gas diffusion electrode (GDE) does not comprise, as a distinct layer, a hydrophobic gas-permeable sheet (HGPS)
      and
      wherein within the electrically conductive layer, comprising an electrically conductive powder and a binder
      the ratio of
         - the total mass of electrically conductive powder present in the electrically conductive layer
            to
         - the total mass of binder present in the electrically conductive layer
      is in the range of from 60:40 to 40:60.

The effects and advantages set out above in connection with the method according to the present invention apply.

The present invention, with its various aspects, especially and preferably relates to a gas diffusion electrode (as described above, preferably as identified above as preferred),
- wherein the electrically conductive layer, comprising an electrically conductive powder and a binder, has a thickness in the range of from 400 µm to 1000 µm, preferably in the range of from 500 µm to 900 µm, more preferably in the range of from 550 µm to 800 µm;
   and/or
- wherein the electrically conductive layer, comprising an electrically conductive powder and a binder has an electrical conductivity at 20 °C of S/m or higher, preferably 5·10⁻⁶ S/m or higher, more preferably 1·10⁻⁵ S/m or higher;
   and/or
- wherein the electrically conductive layer, comprising an electrically conductive powder and a binder has an electrical conductivity at 20 °C of 1·10⁻⁶ S/cm or higher, preferably 5·10⁻⁶ S/cm or higher, more preferably 1·10⁻⁵ S/cm or higher.

The effects and advantages set out above in connection with the method according to the present invention apply.

The present invention, with its various aspects, especially and preferably relates to a gas diffusion electrode (as described above, preferably as identified above as preferred),
- wherein the layer comprising a catalytic material comprises a catalytic material or consists of a catalytic material, preferably consists of a catalytic material, selected from the group consisting of:
   - carbonaceous substances,
      preferably
      - activated carbon,
      - carbon black,
      - graphene,
      - carbon nanotubes
      - graphite
      and/or
      - mixtures thereof;
   - carbonaceous substances doped with heteroatoms,
      - whereby the carbonaceous substances are preferably selected from the group consisting of:
         - activated carbon,
         - carbon black,
         - graphene,
         - carbon nanotubes
         - graphite
            and/or
         - mixtures thereof;
            and
      - whereby the heteroatoms are preferably selected from the group consisting of:
         - nitrogen (N),
         - sulphur (S),
         - boron (B)
            and
         - phosphorus (P);
   - metals, preferably selected from the group consisting of:
      Pt, Pd, Ir, Ag, K, Bi, Ce, La, Ni, Fe, Co, Cr, Cu, Zn, Mo, Zr, Mn, and Ba;
   - oxides, preferably oxides produced by electrodeposition, of metals selected from the group consisting of:
      Bi, Ce, La, Ni, Fe, Co, Cr, Cu, Zn, Mo, Zr, Mn and combinations thereof;
         and/or
      oxy-hydroxides of metals selected from the group consisting of:
         Bi, Ce, La, Ni, Fe, Co, Cr, Cu, Zn, Mo, Zr, Mn and combinations thereof;
   - sulphides, preferably sulphides produced by electrodeposition,
      - phosphides, preferably phosphides produced by electrodeposition,
      - nitrides,
      - double perovskite oxides,
      - high entropy perovskite oxides,
         preferably high entropy perovskite oxide powder, comprising the metals La, Fe, Co, Mn, Cr and Zn;
         and more preferably,
         wherein the mass fraction of each metal selected from the group consisting of Fe, Co, Mn, Cr and Zn is in the range of 0.05 to 0.40, with respect to the total mass of the high entropy perovskite oxide powder;
            and/or
      - high entropy oxides, preferably high entropy oxides produced by sol-gel-method, of any combination of any of the metals selected from the group consisting of:
         Ni, Fe, Co, Cr, Cu, Zn, Mo, Zr, and Mn;
         and/or
   - wherein the layer comprising a catalytic material comprises a catalytic material having an electrical conductivity at 20°C of 1·10⁻⁶ S/m or higher, preferably of 5·10⁻⁴ S/m or higher, more preferably of 1·10⁻³ S/m or higher;
      and/or
   - wherein the layer comprising a catalytic material comprises a catalytic material having an electrical conductivity at 20°C of 1·10⁻⁶ S/cm or higher, preferably of 5·10⁻⁴ S/cm or higher, more preferably of 1·10⁻³ S/cm or higher;
      and/or
   - wherein the layer comprising a catalytic material has a thickness of less than 100 µm, preferably less than 90 µm, more preferably less than 80 µm.

The effects and advantages set out above in connection with the method according to the present invention apply.

The present invention, with its various aspects, especially and preferably relates to a gas diffusion electrode (as described above, preferably as identified above as preferred),
wherein
- carbonaceous substances,
   preferably
   - activated carbon,
   - carbon black,
   - graphene,
   - carbon nanotubes
   - graphite
   and/or
   - mixtures thereof;
- carbonaceous substances doped with heteroatoms,
- whereby the carbonaceous substances are preferably selected from the group consisting of:
   - activated carbon,
   - carbon black,
   - graphene,
   - carbon nanotubes
   - graphite
      and/or
   - mixtures thereof;
   and

- whereby the heteroatoms are preferably selected from the group consisting of:
   - nitrogen (N),
   - sulphur (S),
   - boron (B)
      and
   - phosphorus (P).

Such a gas diffusion electrode is in many cases especially preferred.

The effects and advantages set out above in connection with the method according to the present invention apply.

The present invention, with its various aspects, especially and preferably relates to a gas diffusion electrode (as described above, preferably as identified above as preferred),
- wherein the gas diffusion electrode comprises a hydrophobic gas-permeable sheet (HGPS) and said hydrophobic gas-permeable sheet (HGPS) has a thickness in the range of from 20 µm to 250 µm, preferably in the range of from 65 µm to 180 µm, more preferably in the range of from 80 µm to 150 µm;
   and/or
- wherein the gas diffusion electrode comprises a hydrophobic gas-permeable sheet (HGPS) and said hydrophobic gas-permeable sheet (HGPS) has a porosity in the range of from 50 % to 90 %, preferably in the range of from 55 % to 85 %, more preferably in the range of from 60 % to 80 %;
   and/or
- wherein the gas diffusion electrode comprises a hydrophobic gas-permeable sheet (HGPS) and said hydrophobic gas-permeable sheet (HGPS) has wherein the hydrophobic gas-permeable sheet (HGPS) has a waterproofness pressure in the range of from 80 kPa to 120 kPa, preferably in the range of from 85 kPa to 115 kPa, more preferably in the range of from 90 kPa to 110 kPa.

The effects and advantages set out above in connection with the method according to the present invention apply.

The present invention, with its various aspects, especially and preferably relates to a gas diffusion electrode (as described above, preferably as identified above as preferred),
- whereby the gas diffusion electrode has a thickness in the range of from 550 µm to 800 µm, preferably in the range of from 580 µm to 770 µm, more preferably in the range of from 600 µm to 750 µm;
   and/or
- whereby the gas diffusion electrode has at least one side with a macroscopic surface area of 1 m² to 100 m², preferably two sides with a macroscopic surface area of 1 m² to 100 m² each.

The effects and advantages set out above in connection with the method according to the present invention apply.

The invention also relates to a method for producing a perovskite oxide powder, preferably high entropy perovskite oxide powder, comprising the following steps:

| | | |
|---|---|---|
| P1) | Preparing or providing, as metal sulphates and/or metal nitrates, nitrates and/or sulphates of one two three or more of the metals selected from the group consisting of: | |
| | | Pt, Pd, Ir, Ag, K, Bi, Ce, La, Ni, Fe, Co, Cr, Cu, Zn, Mo, Zr, Mn, and Ba; |
| P2) | Dissolving the metal sulphates or metal nitrates in ultrapure water, intermixing with a chelating agent and acrylamide and heating the resulting solution to a temperature in the range of 100 °C to 150 °C for 2 hours to 3 hours until a sol-gel results; | |
| P3) | drying the sol-gel resulting in step P2) at a temperature in the range of from 180 °C to 300 °C for a time of 12 hours to 24 hours, preferably in a vacuum drying oven, so that a dried intermediate product results; | |
| P4) | heat treating, preferably calcination, of the dried intermediate product resulting in step P3) at a temperature in the range of from 500 °C to 650 °C for a time of 12 hours to 24 hours, so that heat treated intermediate product results; | |
| P5) | additional heat treating, preferably sintering, of the heat treated intermediate product resulting in step P4) at a temperature in the range of from 700 °C to 1400 °C for a time of 1 hour to 12 hours, so that an additionally heat treated intermediate product results; | |
| P6) | milling of the additionally heat treated intermediate product resulting in step P5) | |

preferably milling of the additionally heat treated intermediate product resulting in step P5) with a ball-mill, more preferably with a ball-mill at 250 to 500 rpm, for up to 36 hours,
so that perovskite oxide powder results.

The term "ultrapure water" refers to ultrapure water in accordance with ASTM D5127-13(2018).

Perovskite oxides are preferred catalysts especially for bifunctional gas diffusion electrodes of the present invention. The effects and advantages set out above in connection with the method according to the present invention and/or the gas diffusion electrode according to the present invention apply.

The invention also relates to a perovskite oxide powder, preferably perovskite oxide powder producible or produced in a method as described above, preferably as identified above as preferred,
wherein the perovskite oxide powder, preferably high entropy perovskite oxide powder, comprises the metals La, Fe, Co, Mn, Cr and Zn;
   and preferably,
wherein the mass fraction of each metal selected from the group consisting of Fe, Co, Mn, Cr and Zn is in the range of 0.05 to 0.40, with respect to the total mass of the perovskite oxide powder, preferably high entropy perovskite oxide powder.

With the above-defined perovskite oxide powder, bifunctional gas diffusion electrodes with preferably good bifunctional catalytic activity are obtained.

The effects and advantages set out above in connection with the method according to the present invention and/or the gas diffusion electrode according to the present invention apply.

The invention also relates to the use of a perovskite oxide powder, preferably use of a perovskite oxide powder as described above, preferably use of a perovskite oxide powder as identified above as preferred, for the manufacture of a product selected from the group consisting of:
- catalyst ink
- gas diffusion electrode,
- energy storage device, preferably metal air battery
- fuel cells
   and
- CO₂ capture equipment.

The effects and advantages set out above in connection with present invention apply.

The invention also relates to a method for producing a catalyst ink comprising the following steps
C1) preparing or providing in a first container:
   a catalytic material, preferably a powdered catalytic material, more preferably a Perovskite oxide powder as described above, preferably as identified above as preferred;
C2) preparing or providing in a second container: a binder;
C3) preparing or providing in a third container: a solvent, preferably isopropanol;
C4) Intermixing of the catalytic material prepared and provided in step C1) with at least the binder prepared or provided in step C2) and the solvent prepared or provided in step C3) so that a slurry results as catalyst ink.

That during intermixing in step C4) at least the binder prepared or provided in step C2) and the solvent prepared or provided in step C3) are intermixed, means that further substances may be present during the intermixing and become part of the catalyst ink.

Perovskite oxide powders are the preferred embodiments for bifunctional catalysts.

A catalyst ink according to the present invention is especially well suited for use in a method according to the present invention. Highly desirable uniform distribution of catalytic sites on the surface of the resulting gas diffusion electrode (preferably gas diffusion electrode according to the present invention) are achieved with the catalyst ink when it is utilized in the method according to the present invention.

The effects and advantages set out above in connection with present invention apply.

The present invention, with its various aspects, especially and preferably relates to a method for producing a catalyst ink (as described above, preferably as identified above as preferred),
- wherein further materials are prepared or provided before step C4) and are present during the intermixing in step C4), preferably said further materials comprise nickel powder and/or carbon black powder,
   and/or
- with the following additional step after the slurry results in step C4):
   C5) adjusting the weight ratio of solvent to catalytic material in the slurry resulting in step C4) to a 40:1 weight ratio of solvent to catalytic material, so that an adjusted slurry results as adjusted catalyst ink;
   and/or
- with the following additional step:
   C6) homogenizing
   - the slurry resulting in step C4)
      and/or
   - the adjusted slurry resulting in step C5)
      in a homogenizer, preferably for 90 seconds, so that a refined catalyst ink results;
      and/or
- with the following additional step:
   C7) ultrasonic treatment of the catalyst ink resulting in step C5), preferably in an ice bath, more preferably in an ice bath for 10 to 40 minutes, preferably in many cases 28 to 32 minutes, so that an improved refined catalyst ink results.

The catalyst ink of the present invention is produced by the method for producing a catalyst ink with especially favourable results and favourably high energy efficiency.

The effects and advantages set out above in connection with present invention apply.

The present invention, with its various aspects, especially and preferably relates to a method for producing a catalyst ink (as described above, preferably as identified above as preferred),
- wherein the binder prepared or provided in step C2) is selected from the group consisting of:
   - fluorinated polymer,
      preferably a fluorinated polymer selected from the group consisting of:
      - polytetrafluoroethylene (PTFE)
      - polyvinylidene fluoride (PVDF)
      - fluorinated ethylene-propylene (FEP)
      - ethylenetetrafluoroethylene (ETFE)
      - tetrafluoroethylene-perfluoro-3,6-dioxa-4-methyl-7-octenesulfonic acid copolymer (Nation)
      - polymeric ionomer composed from sulfonated polyether-etherketon (Fumion)
      and
      - combinations thereof;
      more preferably the fluorinated polymer is essentially, even more preferably the fluorinated polymer is,
   - tetrafluoroethylene-perfluoro-3,6-dioxa-4-methyl-7-octenesulfonic acid copolymer (Nation)
      and/or
      polymeric ionomer composed from sulfonated polyether-etherketon (Fumion);
      and/or
- wherein each 1 cm³ volume element of the catalyst ink contains catalytic material and binder in a combined mass in the range of 4 mg to 6 mg, preferably in a combined mass in the range of 4.4 mg to 5.6 mg, more preferably in a combined mass of 5 mg.

That each 1 cm³ volume element of the catalyst ink contains catalytic material and binder in a combined mass in the range of 4 mg to 6 mg, preferably in a combined mass in the range of 4.4 mg to 5.6 mg, more preferably in a combined mass of 5 mg, means that catalytic material and binder are equally spatially distributed within the catalyst ink. This results in especially favourable results when the catalyst ink is used in the method according to the present invention.

The term "catalyst ink" comprises the terms "adjusted catalyst ink", "refined catalyst ink" and "improved refined catalyst ink".

The effects and advantages set out above in connection with present invention apply.

Nafion is used as a binder also in the catalyst layer of metal-air batteries. It enhances the physical and chemical stability of the catalyst layer, ensuring efficient electron and ion transport. Nation's unique properties, such as chemical inertness, thermal stability, and ionic conductivity, make it an ideal binder material. It helps maintain the structural integrity of the catalyst layer, ensuring optimal contact between the catalyst and the electrolyte, which is crucial for the oxygen reduction reaction (ORR) in metal-air batteries.

The invention also relates to a catalyst ink, prepared or preparable, preferably prepared, in a method as described above, preferably as identified above as preferred.

The effects and advantages set out above in connection with present invention apply.

The invention also relates to a use of catalyst ink (as described above, preferably as identified above as preferred), for production of a gas diffusion electrode, preferably
for production of a gas diffusion electrode according to a method as described above (preferably as identified above as preferred);
   and/or
for production of a gas diffusion electrode (as described above, preferably as identified above as preferred).

The above-defined uses of a catalyst ink (as described above, preferably as identified above as preferred) for the production of a gas diffusion electrode yield gas diffusion electrodes with an especially uniform distribution of catalytic sites on their surface. The above advantages associated therewith apply. This has been confirmed in own experiments.

The present invention, with its various aspects, especially and preferably relates to a use of catalyst ink (as described above, preferably as identified above as preferred), wherein the use comprises the drop-casting of the catalyst ink onto a substrate, preferably onto a carbon-containing substrate.

With these methods a favourably uniform distribution of catalytic sites on a surface of a gas diffusion electrode is achieved.

The effects and advantages set out above in connection with present invention apply.

The invention also relates to an electrochemical device, comprising a gas diffusion electrode (as described above, preferably as identified above as preferred).

The advantages of the gas diffusion electrode according to the present invention are realised to an especially favourable extent by an electrochemical device, comprising a gas diffusion electrode (as described above, preferably as identified above as preferred). This has been confirmed in own experiments.

The present invention, with its various aspects, especially and preferably relates to an electrochemical device (as described above, preferably as identified above as preferred), wherein the electrochemical device is selected from the group consisting of:
- Energy storage device, preferably metal air battery;
- Fuel cells;
   and
- CO₂ capture equipment.

The advantages of the gas diffusion electrode according to the present invention are realised to an especially favourable extent when the electrochemical device is selected from the above list. The advantages of the gas diffusion electrode according to the present invention are realised in a preferred manner when the electrochemical device is a metal air battery.

The invention also relates to a use of a gas diffusion electrode (as described above, preferably as identified above as preferred) in an energy storage device, preferably in a metal air battery.

The effects and advantages set out above in connection with present invention apply.

The invention also relates to a use of a gas diffusion electrode (as described above, preferably as identified above as preferred) as functional part of an energy storage device, preferably as functional part of a metal air battery.

The effects and advantages set out above in connection with present invention apply.

The invention also relates to an oxygen evolution reaction (OER) electrode comprising or consisting of, preferably consisting of, a conductive material comprising interspaces, wherein preferably the conductive material comprising interspaces is a metallic mesh and/or a metallic foam.

The effects and advantages set out above in connection with present invention apply.

The present invention, with its various aspects, especially and preferably relates to an oxygen evolution reaction (OER) electrode (as described above, preferably as identified above as preferred),
- wherein the conductive material comprising interspaces is selected from the group consisting of:
   - metallic mesh, preferably metallic mesh wherein the surface of the metallic mesh is able to catalyse the oxygen evolution reaction of a gas diffusion electrode;
   - metallic mesh at least partially coated, preferably fully coated, with a catalytic material, wherein preferably the surface of the catalytic material is able to catalyse the oxygen evolution reaction of a gas diffusion electrode;
   - metallic foam, preferably metallic foam wherein the surface of the metallic foam is able to catalyse the oxygen evolution reaction of a gas diffusion electrode;
      and
   - metallic foam at least partially coated, preferably fully coated, with a catalytic material, wherein preferably the surface of the catalytic material is able to catalyse the oxygen evolution reaction of a gas diffusion electrode;
      preferably,
- wherein the conductive material comprising interspaces is selected from the group consisting of:
   nickel containing mesh, preferably mesh essentially consisting of nickel;
   nickel containing mesh coated with high entropy hydroxides, preferably mesh essentially consisting of nickel coated with high entropy hydroxides;
   nickel containing foam, preferably foam essentially consisting of nickel;
   nickel containing foam coated with high entropy hydroxides, preferably foam essentially consisting of nickel coated with high entropy hydroxides.

The effects and advantages set out above in connection with present invention apply.

The present invention, with its various aspects, especially and preferably relates to an oxygen evolution reaction (OER) electrode (as described above, preferably as identified above as preferred),
- wherein the oxygen evolution reaction (OER) electrode does not comprise a hydrophobic gas-permeable sheet (HGPS);
   and/or
- wherein the oxygen evolution reaction (OER) electrode does not comprise a distinct layer comprising an electrically conductive powder, preferably does not comprise a distinct layer comprising an electrically conductive powder and a binder.

The invention also relates to a battery,
- either comprising
   - a first vessel;
   - a bifunctional air electrode; preferably a bifunctional electrode producible or produced, preferably produced, in a method as described above (preferably as identified above as preferred)
      and/or
      a bifunctional electrode (as described above, preferably as identified above as preferred);
   - a metal electrode;
      and
   - a first volume of liquid electrolyte within the first vessel, wherein the first volume of liquid electrolyte separates the bifunctional air electrode from the metal electrode;
      or
- comprising
   - a first vessel;
   - an oxygen reduction reaction (ORR) electrode, preferably an oxygen reduction reaction (ORR) electrode producible or produced, preferably produced, in a method as described above (preferably as identified above as preferred);
      and/or
      an oxygen reduction reaction (ORR) electrode as described above (preferably as identified above as preferred);
   - an oxygen evolution reaction (OER) electrode, preferably an oxygen evolution reaction (OER) as described above (preferably as identified above as preferred);
   - a metal electrode;
      and
   - a first volume of liquid electrolyte within the first vessel, wherein the first volume of liquid electrolyte separates from one another the oxygen reduction reaction (ORR) electrode, the oxygen evolution reaction (OER) electrode and the metal electrode.

The present invention, with its various aspects, especially and preferably relates to a battery (preferably as described above, more preferably as identified above as preferred),
- comprising
   - a first vessel;
   - a bifunctional air electrode; preferably a bifunctional electrode producible or produced, preferably produced, in a method as described above (preferably as identified above as preferred) and/or
      a bifunctional electrode (as described above, preferably as identified above as preferred);
   - a metal electrode;
      and
   - a first volume of liquid electrolyte within the first vessel, wherein the first volume of liquid electrolyte separates the bifunctional air electrode from the metal electrode.

In many cases a two electrode setup with a bifunctional electrode (for charging and discharging) and a metal electrode is preferred. Such setups are in many cases preferred due to the mechanical simplicity and the low number of parts.

The present invention, with its various aspects, especially and preferably relates to a battery (preferably as described above, more preferably as identified above as preferred),
- comprising
   - a first vessel;
   - an oxygen reduction reaction (ORR) electrode, preferably an oxygen reduction reaction (ORR) electrode producible or produced, preferably produced, in a method as described above (preferably as identified above as preferred);
      and/or
      an oxygen reduction reaction (ORR) electrode as described above (preferably as identified above as preferred);
   - an oxygen evolution reaction (OER) electrode, preferably an oxygen evolution reaction (OER) as described above (preferably as identified above as preferred);
   - a metal electrode;
      and
   - a first volume of liquid electrolyte within the first vessel, wherein the first volume of liquid electrolyte separates from one another the oxygen reduction reaction (ORR) electrode, the oxygen evolution reaction (OER) electrode and the metal electrode.

In many cases a three electrode setup with an OER electrode (for charging), an (additional separate) ORR electrode (for discharging) and a metal electrode is preferred. Such setups are in many cases preferred due to the possibility of separately replacing the ORR and OER electrodes when needed.

The present invention is hereafter further described by means of figures.

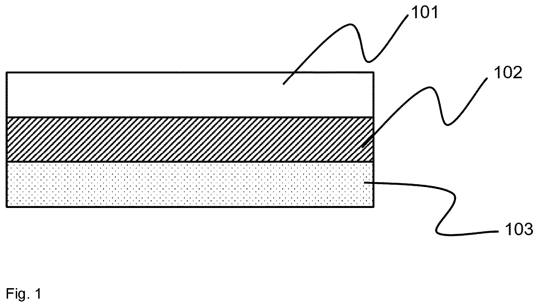

Fig. 1 shows the layer structure of an exemplary electrode according to the present invention without a hydrophobic gas-permeable sheet (HGPS). The layers are an electrically conductive layer (103), a layer comprising a continuous conductive material comprising interspaces filled with a different material (102) and a layer comprising a catalytic material, wherein the catalytic material is capable to catalyse oxygen reduction reaction (ORR) of a gas diffusion electrode (101).

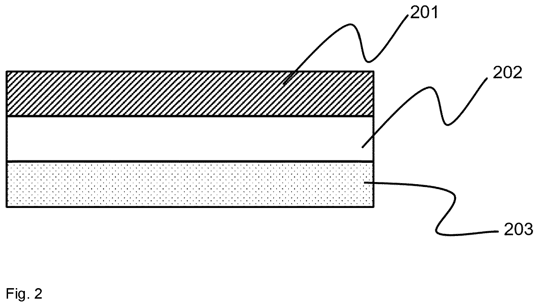

Fig. 2 shows the layer structure of an exemplary electrode according to the present invention without a hydrophobic gas-permeable sheet (HGPS). The layers are an electrically conductive layer (203), a layer comprising a continuous conductive material comprising interspaces filled with a different material (201) and a layer comprising a catalytic material, wherein the catalytic material is capable to catalyse oxygen reduction reaction (ORR) of a gas diffusion electrode (202).

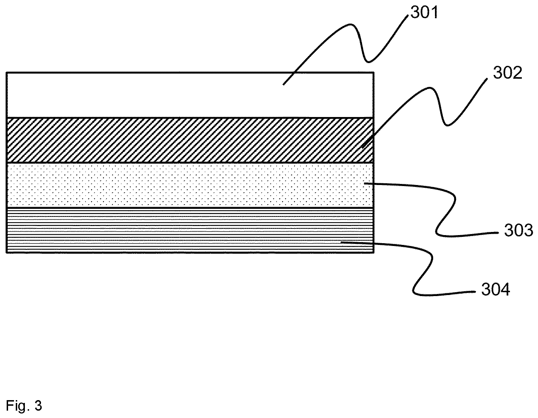

Fig. 3 shows the layer structure of an exemplary electrode according to the present invention with a hydrophobic gas-permeable sheet (HGPS). The layers are an electrically conductive layer (303), a layer comprising a continuous conductive material comprising interspaces filled with a different material (302), a layer comprising a catalytic material, wherein the catalytic material is capable to catalyse oxygen reduction reaction (ORR) of a gas diffusion electrode (301) and the hydrophobic gas-permeable sheet (304).

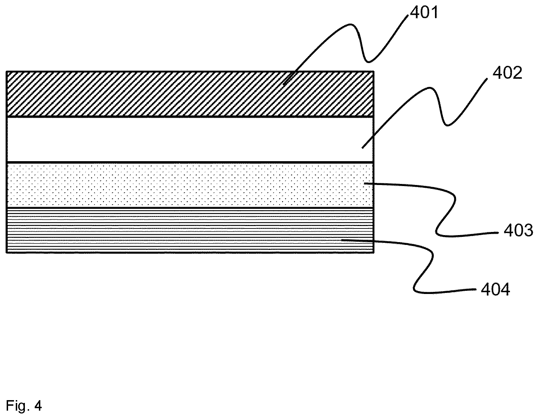

Fig. 4 shows the layer structure of an exemplary electrode according to the present invention with a hydrophobic gas-permeable sheet (HGPS). The layers are an electrically conductive layer (404), a layer comprising a continuous conductive material comprising interspaces filled with a different material (401), a layer comprising a catalytic material, wherein the catalytic material is capable to catalyse oxygen reduction reaction (ORR) of a gas diffusion electrode (402) and the hydrophobic gas-permeable sheet (404).

The present invention is hereafter further described by means of examples.

### Examples

### Example 1: manufacture of an electrically conductive layer

6g of Teflon^{™} PTFE DISP 30 (as a binder) was mixed with 80 ml isopropanol (100%), and then poured onto 10g of Acetylene black (^{©}Thermo Fisher Scientific Inc.) (as an electrically conductive powder). The mixture was kneaded in a commercial kneader mixer until a dough-like mixture was formed. The dough like mixture was then calendared in a rolling mill to produce a sheet like structure, followed by decreasing the gap between the rollers of the rolling mill to adjust the thickness. The thickness was reduced stepwise until it reached a final thickness of 450 micrometres. The resulting sheet (electrically conductive layer) was trimmed to a dimension of 10 cm x10 cm.

In accordance with the usual understanding of the skilled person, Teflon^{™} PTFE DISP 30 is an aqueous suspension PTFE containing 60 wt.-% PTFE.

Further own experiments have shown that the Teflon^{™} PTFE DISP 30 used as a binder in Example 1 could be replaced by corresponding amounts of polyvinylidene fluoride (PVDF) in N-Methyl-2-pyrrolidone (NMP) or fluorinated ethylene-propylene (FEP) in suitable suspension medium. Equally positive results were achieved.

### Example 2: manufacturing a bifunctional gas diffusion electrode

### 2-1 Synthesis of the catalytic material

Single-phase high entropy perovskite oxides (HEPO) [(La(Fe0.3Co0.1Mn0.2Cr0.2Zn0.2)O3-δ] where synthesised as follows:
Stoichiometric amounts of metal salts (for 0.03 mol of perovskite oxide) were dissolved in 200 mL water to provide a dissolved metal solution. Said dissolved metal solution was intermixed with a chelating agent (0.075 mol) and acrylamide (0.225 mol) and the mixture was stirred on a hot plate at 80 °C until gelation so that a sol-gel was obtained.

Said sol-gel was subjected to calcinating at 500 °C for 12 hours, then sintering at 850 °C for 3 hours to provide a sintered metal oxide material. Said sintered metal oxide was milled in a ball-mill at 300 rpm for 36 hours to obtain a single-phase double perovskite oxide powder (catalytic material).

### 2-2 Manufacturing a continuous conductive material comprising interspaces filled with a different material

High-entropy FeCoCrMnOOH nano-sheets on commercial nickel mesh (Ni201, 2mm) were synthesised by in-situ growth of FeCoCrMnOOH nanosheets on the surface of Ni201 using a simple three-electrode electrodeposition technique, which involved the working electrode (Nickel mesh), the counter electrode (graphite) and the reference electrode (saturated calomel electrode). The electrolyte was prepared by dissolving Co(NO₃)₂·3H₂O (0.25 mmol), Cr(NO₃)₃·9H₂O (0.25 mmol), Mn(NO₃)₂ (0.5 mmol) and Fe(NO₃)₃·9H₂O (0.25 mmol) in ultrapure water. Electrodeposition was carried out for 30 min at -1.2 V vs. Saturated calomel electrode (SCE). High-entropy FeCoCrMnOOH on nickel mesh (FeCoCrMnOOH/Ni201) was obtained after electrodeposition, which was then washed with ultrapure water and dried in a vacuum oven at 60°C so that a coated continuous conductive material comprising interspaces filled with a different material resulted.

### 2-3 manufacturing catalyst ink/slurry

Catalyst ink (slurry) is formulated by combining the single-phase high entropy perovskite oxide powder (catalytic material) (prepared according to above example 2-1) and commercially available Ni catalyzer with nitrogen-doped carbon black and Nafion (a fluorinated ionomer). The loading of each component is optimised to achieve a uniform distribution, with a mass loading of 5 mg·cm⁻². Isopropanol (100%) was used as the solvent. The weight percentage of solvent to catalysts in the slurry was adjusted to a 40:1 ratio, and the mixture was then stirred for 90 seconds using a homogenizer. Next, the slurry was subjected to ultrasonication inside an ice bath for 30 minutes to enhance dispersion of the catalytic material. A catalyst ink resulted.

### 2-4 Assembling the bifunctional gas diffusion electrode

A commercial gas diffusion PTFE layer was laid down and the electrically conductive layer (manufactured according to above example 1) was placed on top. Then the catalyst ink (manufactured according to above example 2-3) was drop-casted onto the electrically conductive layer (onto the side of the electrically conductive layer facing upwards i.e. facing away from the commercial gas diffusion PTFE layer) so that a uniform layer of catalyst ink on the electrically conductive layer resulted.

The coated continuous conductive material comprising interspaces filled with a different material (High-entropy FeCoCrMnOOH nano-sheets on commercial nickel mesh (Ni201, 2mm), prepared according to above example 2-2) was then placed on top of said the layer of catalyst ink.

All layers were then hot-pressed at 120°C for 4 minutes with a pressure of more than 0.005 tonnes/cm² minutes and the resulting sandwich was thereafter dried at 80°C for 3 hours so that a ready to use bifunctional gas diffusion electrode (suitable for use in a metal air battery) resulted.

### Example 3: manufacturing a bifunctional gas diffusion electrode

### 3-1 Synthesis of the catalytic material

Single-phase high entropy perovskite oxides (HEPO) [(La(Fe0.3Co0.1 Mn0.2Cr0.2Zn0.2)O3-δ] where synthesised as follows:
Stoichiometric amounts of metal salts (for 0.03 mol of perovskite oxide) were dissolved in 200 mL water to provide a dissolved metal solution. Said dissolved metal solution was intermixed with a chelating agent (0.075 mol) and acrylamide (0.225 mol) and the mixture was stirred on a hot plate at 120 °C until gelation so that a sol-gel was obtained.

Said sol-gel was subjected to calcinating at 500 °C for 12 hours, then sintering at 850 °C for 3 hours to provide a sintered metal oxide material. Said sintered metal oxide was milled in a ball-mill at 300 rpm for 36 hours to obtain a single-phase double perovskite oxide powder (catalytic material).

### 3-2 Manufacturing a continuous conductive material comprising interspaces filled with a different material

High-entropy FeCoCrMnOOH nano-sheets on commercial nickel mesh (Ni201, 2mm) were synthesised by in-situ growth of FeCoCrMnOOH nanosheets on the surface of Ni201 using a simple three-electrode electrodeposition technique, which involved the working electrode (Nickel mesh), the counter electrode (graphite) and the reference electrode (saturated calomel electrode). The electrolyte was prepared by dissolving Co(NO₃)₂·3H₂O (0.25 mmol), Cr(NO₃)₃·9H₂O (0.25 mmol), Mn(NO₃)₂ (0.5 mmol) and Fe(NO₃)₃·9H₂O (0.25 mmol) in ultrapure water. Electrodeposition was carried out for 30 min at -1.2 V vs. Saturated calomel electrode (SCE). High-entropy FeCoCrMnOOH on nickel mesh (FeCoCrMnOOH/Ni201) was obtained after electrodeposition, which was then washed with ultrapure water and dried in a vacuum oven at 60°C so that a coated continuous conductive material comprising interspaces filled with a different material resulted.

### 3-3 manufacturing catalyst foil

4g of Teflon^{™} PTFE DISP 30 (as a binder) was mixed with 80 ml isopropanol (100%), and then poured onto the mixture comprising 6g of activated carbon, 2.5g of Carbon black, 2.5g of Graphite and 4g of single-phase high entropy perovskite oxide powder (catalytic material) (prepared according to above example 3-1). The mixture was kneaded in a commercial kneader mixer until a dough-like mixture was formed. The dough like mixture was then calendared in a rolling mill to produce a sheet like structure, followed by decreasing the gap between the rollers of the rolling mill to adjust the thickness. The thickness was reduced stepwise until it reached a final thickness of 100 micrometres. The resulting foil (foil for coating a first side of a laminar electrically conductive material so that a laminar electrically conductive material (ECM) coated on a first side with a catalytic material coating results) was trimmed to a dimension of 10 cm x10 cm.

### 3-4 Assembling the bifunctional gas diffusion electrode

A commercial gas diffusion PTFE layer was laid down and the electrically conductive layer (manufactured according to above example 1) was placed on top. Then the catalyst foil (manufactured according to above example 3-3) was placed on top of the electrically conductive layer (on the side of the electrically conductive layer facing upwards i.e. facing away from the commercial gas diffusion PTFE layer) so that a uniform layer of catalyst on the electrically conductive layer resulted.

The coated continuous conductive material comprising interspaces filled with a different material (High-entropy FeCoCrMnOOH nano-sheets on commercial nickel mesh (Ni201, 2mm), prepared according to above example 3-2) was then placed on top of said the layer of catalyst.

All layers were then hot-pressed at 120°C for 4 minutes with a pressure of more than 0.005 tonnes/cm² minutes and the resulting sandwich was thereafter dried at 80°C for 3 hours so that a ready to use bifunctional gas diffusion electrode (suitable for use in a metal air battery) resulted.

### Example 4: Manufacture of a ORR (Oxygen Reduction Reaction) electrode

### 4-1 Preparation or Post-treatment of the catalytic material

Commercially available MnO₂ (manganese oxide) was ball-milled in a ball-mill at 400 rpm for 12 hours to obtain electrocatalytically active MnO₂ material powder.

### 4-2 continuous conductive material comprising interspaces filled with a different material

A commercially available stainless steel mesh was used as continuous conductive material comprising interspaces filled with a different material.

### 4-3 manufacturing catalyst ink/slurry

Catalyst ink (slurry) is formulated by combining the MnOz material powder (catalytic material) (prepared according to above example 4-1) with nitrogen-doped carbon black and Nation (a fluorinated ionomer). The loading of each component is optimised to achieve a uniform distribution, with a mass loading of 5 mg·cm⁻². Isopropanol (100%) was used as the solvent. The weight percentage of solvent to catalysts in the slurry was adjusted to a 40:1 ratio, and the mixture was then stirred for 90 seconds using a homogenizer. Next, the slurry was subjected to ultrasonication inside an ice bath for 30 minutes to enhance dispersion of the catalytic material. A catalyst ink resulted.

### 4-4 Assembling the ORR gas diffusion electrode (oxygen reduction reaction gas diffusion electrode)

A commercial gas diffusion PTFE layer was laid down and the electrically conductive layer (manufactured according to above example 1) was placed on top. Then the catalyst ink (manufactured according to above example 4-3) was drop-casted onto the electrically conductive layer (onto the side of the electrically conductive layer facing upwards i.e. facing away from the commercial gas diffusion PTFE layer) so that a uniform layer of catalyst ink on the electrically conductive layer resulted.

Non-coated continuous conductive material comprising interspaces filled with a different material (commercially available stainless steel mesh from above example 4-2) was then placed on top of said the layer of catalyst ink.

All layers were then hot-pressed at 120°C for 4 minutes with a pressure of more than 0.005 tonnes/cm² minutes and the resulting sandwich was thereafter dried at 80°C for 3 hours so that a ready to use ORR gas diffusion electrode (oxygen reduction reaction gas diffusion electrode) resulted (suitable for use in a metal air battery).

### Example 5: Manufacture of an PER (Oxygen Evolution Reaction) electrode

High-entropy FeCoCrMnOOH nano-sheets on commercial nickel mesh (Ni201, 2mm) were synthesised by in-situ growth of FeCoCrMnOOH nanosheets on the surface of Ni201 using a simple three-electrode electrodeposition technique according to above example 2-2.

The resulting coated continuous conductive material comprising interspaces filled with a different material was used as ready stand-alone charging electrode (OER electrode; oxygen evolution reaction electrode) in a metal air battery.

### Example 6: Manufacture of an electrically conductive layer

12g of Teflon^{™} PTFE DISP 30 (as a binder) was mixed with 80 ml isopropanol (100%), and then poured onto 9g of Acetylene black (^{©} Thermo Fisher Scientific Inc.) (as an electrically conductive powder). The mixture was kneaded in a commercial kneader mixer until a dough-like mixture was formed. The dough like mixture was then calendared in a rolling mill to produce a sheet like structure, followed by decreasing the gap between the rollers of the rolling mill to adjust the thickness. The thickness was reduced stepwise until it reached a final thickness of 450 micrometres. The resulting sheet (electrically conductive layer) was trimmed to a dimension of 10 cm x10 cm.

Further own experiments have shown that the Teflon^{™} PTFE DISP 30 used as a binder in Example 6 could be replaced by corresponding amounts of polytetrafluoroethylene (PTFE), polyvinylidene fluoride (PVDF), fluorinated ethylene-propylene (FEP). Equally positive results were achieved.

### Example 7: Manufacturing of a bifunctional gas diffusion electrode without a hydrophobic gas-permeable sheet (HGPS)

### 7-1 Synthesis of the catalytic material

Single-phase high entropy perovskite oxides (HEPO) [(La(Fe0.35Co0.1Mn0.15Cr0.2Zn0.2)O3-δ] where synthesised as follows:
Stoichiometric amounts of metal salts (for 0.03 mol of perovskite oxide) were dissolved in 200 mL water to provide a dissolved metal solution. Said dissolved metal solution was intermixed with a chelating agent (0.075 mol) and acrylamide (0.225 mol) and the mixture was stirred on a hot plate at 120 °C until gelation so that a sol-gel was obtained.

Said sol-gel was subjected to calcinating at 500 °C for 12 hours, then sintering at 850 °C for 3 hours to provide a sintered metal oxide material. Said sintered metal oxide was milled in a ball-mill at 300 rpm for 36 hours to obtain a single-phase double perovskite oxide powder (catalytic material).

### 7-2 Manufacturing of a continuous conductive material comprising interspaces filled with a different material

High-entropy FeCoCrMnOOH nano-sheets on commercial nickel mesh (Ni201, 2mm) were synthesised by in-situ growth of FeCoCrMnOOH nanosheets on the surface of Ni201 using a simple three-electrode electrodeposition technique, which involved the working electrode (Nickel mesh), the counter electrode (graphite) and the reference electrode (saturated calomel electrode). The electrolyte was prepared by dissolving Co(NO₃)₂·3H₂O (0.25 mmol), Cr(NO₃)₃·9H₂O (0.25 mmol), Mn(NO₃)₂ (0.5 mmol) and Fe(NO₃)₃·9H₂O (0.25 mmol) in ultrapure water. Electrodeposition was carried out for 30 min at -1.2 V vs. saturated calomel electrode (SCE). High-entropy FeCoCrMnOOH on nickel mesh (FeCoCrMnOOH/Ni201) was obtained after electrodeposition, which was then washed with ultrapure water and dried in a vacuum oven at 60°C so that a coated continuous conductive material comprising interspaces filled with a different material resulted.

### 7-3 manufacturing catalyst ink / slurry)

Catalyst ink (slurry) was formulated by combining the single-phase high entropy perovskite oxide powder (catalytic material) (prepared according to above example 7-1) and commercially available Ni catalyst with nitrogen-doped carbon black and Nafion (a fluorinated ionomer). The loading of each component is optimised to achieve a uniform distribution of substances in the slurry, with a mass loading of 5 mg·cm⁻². Isopropanol (100%) was used as the solvent. The weight percentage of solvent to catalysts in the slurry was adjusted to a 40:1 ratio, and the mixture was then stirred for 90 seconds using a homogenizer. Next, the slurry was subjected to ultrasonication inside an ice bath for 30 minutes to enhance dispersion of the catalytic material. A catalyst ink resulted.

### 7-4 Assembling the bifunctional gas diffusion electrode

The electrically conductive layer (manufactured according to above example 6) was laid down. Then the catalyst ink (manufactured according to above example 7-3) was drop-casted onto the electrically conductive layer so that a uniform layer of catalyst ink on the electrically conductive layer resulted.

The coated continuous conductive material comprising interspaces filled with a different material (High-entropy FeCoCrMnOOH nano-sheets on commercial nickel mesh (Ni201, 2mm), prepared according to above example 7-2) was then placed on top of said layer of catalyst ink.

All layers were then hot-pressed at 120°C for 4 minutes with a pressure of more than 0.005 tonnes/cm² minutes and the resulting sandwich was thereafter dried at 80°C for 3 hours so that a ready to use bifunctional gas diffusion electrode (suitable for use in a metal air battery) resulted.

Own experiments have shown that the bifunctional gas diffusion electrode (suitable for use in a metal air battery) resulting from this example (Example 7) was leak proof without the presence of an additional hydrophobic gas-permeable sheet (HGPS) when used in a suitable metal air battery.

### Example 8: Manufacturing of a bifunctional gas diffusion electrode

### 8-1 Synthesis of the catalytic material

Single-phase high entropy perovskite oxides (HEPO) [(La(Fe0.35Co0.1Mn0.15Cr0.2Zn0.2)O3-δ] where synthesised as follows:
Stoichiometric amounts of metal salts (for 0.03 mol of perovskite oxide) were dissolved in 200 mL water to provide a dissolved metal solution. Said dissolved metal solution was intermixed with a chelating agent (0.075 mol) and acrylamide (0.225 mol) and the mixture was stirred on a hot plate at 140 °C until gelation so that a sol-gel was obtained.

Said sol-gel was subjected to calcinating at 500 °C for 12 hours, then sintering at 850 °C for 3 hours to provide a sintered metal oxide material. Said sintered metal oxide was milled in a ball-mill at 300 rpm for 36 hours to obtain a single-phase double perovskite oxide powder (catalytic material).

### 8-2 Manufacturing of a continuous conductive material comprising interspaces filled with a different material

High-entropy FeCoCrMnOOH nano-sheets on commercial nickel mesh (Ni201, 2mm) were synthesised by in-situ growth of FeCoCrMnOOH nanosheets on the surface of Ni201 using a simple three-electrode electrodeposition technique, which involved the working electrode (Nickel mesh), the counter electrode (graphite) and the reference electrode (saturated calomel electrode). The electrolyte was prepared by dissolving Co(NO₃)₂·3H₂O (0.25 mmol), Cr(NO₃)₃·9H₂O (0.25 mmol), Mn(NO₃)₂ (0.5 mmol) and Fe(NO₃)₃·9H₂O (0.25 mmol) in ultrapure water. Electrodeposition was carried out for 30 min at -1.2 V vs. saturated calomel electrode (SCE). High-entropy FeCoCrMnOOH on nickel mesh (FeCoCrMnOOH/Ni201) was obtained after electrodeposition, which was then washed with ultrapure water and dried in a vacuum oven at 60°C so that a coated continuous conductive material comprising interspaces filled with a different material resulted.

### 8-3 Preparation of a catalyst ink / slurry

Catalyst ink (slurry) is formulated by combining the single-phase high entropy perovskite oxide powder (catalytic material) (prepared according to above example 8-1) and commercially available Ni catalyzer with nitrogen-doped carbon black and Nafion (a fluorinated ionomer). The loading of each component is optimised to achieve a uniform distribution, with a mass loading of 5 mg·cm⁻². Isopropanol (100%) was used as the solvent. The weight percentage of solvent to catalysts in the slurry was adjusted to a 40:1 ratio, and the mixture was then stirred for 90 seconds using a homogenizer. Next, the slurry was subjected to ultrasonication inside an ice bath for 30 minutes to enhance dispersion of the catalytic material. A catalyst ink resulted.

### 8-4 Assembling the bifunctional gas diffusion electrode

A commercial gas diffusion PTFE layer was laid down and the electrically conductive layer (manufactured according to above example 1) was placed on top. Then the catalyst ink (manufactured according to above example 8-3) was drop-casted onto the electrically conductive layer (onto the side of the electrically conductive layer facing upwards i.e. facing away from the commercial gas diffusion PTFE layer) so that a uniform layer of catalyst ink on the electrically conductive layer resulted.

The coated continuous conductive material comprising interspaces filled with a different material (High-entropy FeCoCrMnOOH nano-sheets on commercial nickel mesh (Ni201, 2mm), prepared according to above example 8-2) was then placed on top of said the layer of catalyst ink.

All layers were then hot-pressed at 120°C for 4 minutes with a pressure of more than 0.005 tonnes/cm² minutes and the resulting sandwich was thereafter dried at 80°C for 3 hours so that a ready to use bifunctional gas diffusion electrode (suitable for use in a metal air battery) resulted.

Own experiments have shown that the bifunctional gas diffusion electrode (suitable for use in a metal air battery) resulting from this example (Example 8) was leak proof when used in a suitable metal air battery.

### Example 9: Manufacture of a ORR (Oxygen Reduction Reaction) electrode

### 9-1 Manufacture of the catalytic material

Commercially available Mn₂O₃ (Manganese (III) Oxide) ball-milled at 400 rpm for 12 hours to obtain electrocatalytically active Mn₂O₃ Powder (catalytic material).

### 9-2 continuous conductive material comprising interspaces filled with a different material

A commercially available stainless steel mesh was used as continuous conductive material comprising interspaces filled with a different material.

### 9-3 Preparation of a catalyst ink/slurry

Catalyst ink (slurry) is formulated by combining the Mn₂O₃ material powder (catalytic material) (prepared according to above example 9-1) with nitrogen-doped carbon black and Nation (a fluorinated ionomer). The loading of each component is optimised to achieve a uniform distribution, with a mass loading of 5 mg·cm⁻². Isopropanol (100%) was used as the solvent. The weight percentage of solvent to catalysts in the slurry was adjusted to a 40:1 ratio, and the mixture was then stirred for 90 seconds using a homogenizer. Next, the slurry was subjected to ultrasonication inside an ice bath for 30 minutes to enhance dispersion of the catalytic material. A catalyst ink resulted.

### 9-4 Assembling the ORR gas diffusion electrode (oxygen reduction reaction gas diffusion electrode)

A commercial gas diffusion PTFE layer was laid down and the electrically conductive layer (manufactured according to above example 1) was placed on top. Then the catalyst ink (manufactured according to above example 9-3) was drop-casted onto the electrically conductive layer (onto the side of the electrically conductive layer facing upwards i.e. facing away from the commercial gas diffusion PTFE layer) so that a uniform layer of catalyst ink on the electrically conductive layer resulted.

Non-coated continuous conductive material comprising interspaces filled with a different material (commercially available stainless steel mesh from above example 9-2) was then placed on top of said the layer of catalyst ink.

All layers were then hot-pressed at 120°C for 4 minutes with a pressure of more than 0.005 tonnes/cm² minutes and the resulting sandwich was thereafter dried at 80°C for 3 hours so that a ready to use ORR gas diffusion electrode (oxygen reduction reaction gas diffusion electrode) resulted (suitable for use in a metal air battery).

Own experiments have shown that the bifunctional gas diffusion electrode (suitable for use in a metal air battery) resulting from this example (Example 9) was leak proof when used in a suitable metal air battery.

### Example 10: Manufacturing of a ORR (Oxygen Reduction Reaction) electrode without a hydrophobic gas-permeable sheet (HGPS)

### 10-1 Synthesis of the catalytic material

Commercially available Mn₂O₃ (Manganese(III) Oxide) was ball-milled at 400 rpm for 12 hours to obtain electrocatalytically active Mn₂O₃ material powder (catalytic material).

### 10-2 Continuous conductive material comprising interspaces filled with a different material

A commercially available stainless steel mesh was used as continuous conductive material comprising interspaces filled with a different material.

### 10-3 Preparation of a Catalyst ink/slurry

Catalyst ink (slurry) is formulated by combining the Mn₂O₃ material powder (catalytic material) (prepared according to above example 10-1) with nitrogen-doped carbon black and Nafion (a fluorinated ionomer). The loading of each component is optimised to achieve a uniform distribution, with a mass loading of 5 mg·cm⁻². Isopropanol (100%) was used as the solvent. The weight percentage of solvent to catalysts in the slurry was adjusted to a 40:1 ratio, and the mixture was then stirred for 90 seconds using a homogenizer. Next, the slurry was subjected to ultrasonication inside an ice bath for 30 minutes to enhance dispersion of the catalytic material. A catalyst ink resulted.

### 10-4 Assembling the ORR gas diffusion electrode (oxygen reduction reaction gas diffusion electrode)

The electrically conductive layer (manufactured according to above example 6) was laid down. Then the catalyst ink (manufactured according to above example 10-3) was drop-casted onto the electrically conductive layer so that a uniform layer of catalyst ink on the electrically conductive layer resulted.

Non-coated continuous conductive material comprising interspaces filled with a different material (commercially available stainless steel mesh from above example 10-2) was then placed on top of said the layer of catalyst ink.

All layers were then hot-pressed at 120°C for 4 minutes with a pressure of more than 0.005 tonnes/cm² minutes and the resulting sandwich was thereafter dried at 80°C for 3 hours so that a ready to use ORR gas diffusion electrode (oxygen reduction reaction gas diffusion electrode) without a hydrophobic gas-permeable sheet (HGPS) resulted (suitable for use in a metal air battery).

Own experiments have shown that ORR gas diffusion electrode (suitable for use in a metal air battery) resulting from this example (Example 10) was leak proof without the presence of an additional hydrophobic gas-permeable sheet (HGPS) when used in a suitable metal air battery.

## Claims

1. Method for producing a gas diffusion electrode (GDE), comprising the following steps:
| | |
|---|---|
| S1) | preparing or providing: |
| | - an amount of an electrically conductive powder |
| | and |
| | - an amount of a binder; |
| S2) | intermixing the amount of electrically conductive powder prepared or provided in step S1) and the amount of binder prepared or provided in step S1) so that a mixture of electrically conductive powder and binder results |
| | and |
| | producing a foil from said mixture, so that a laminar electrically conductive material (ECM) results, comprising a polymeric matrix and, embedded therein, a particulate material; |
and either the additional steps:
| | |
|---|---|
| S3a) | preparing or providing a catalytic material, wherein the catalytic material is capable to catalyse oxygen reduction reaction (ORR) of a gas diffusion electrode (GDE); |
| S4a) | coating a first side of the laminar electrically conductive material resulting in step S2), with the catalytic material prepared or provided in step S3a) so that a laminar electrically conductive material (ECM) coated on a first side with a catalytic material coating results; |
| S5a) | preparing or providing a conductive material comprising interspaces; |
| | |
|---|---|
| S6a) | applying the conductive material comprising interspaces prepared or provided in step S5a) to the catalytic material coating of the laminar electrically conductive material (ECM) coated on a first side with a catalytic material coating resulting in step S4a), so that a gas diffusion electrode (GDE) results; |
or the additional steps:
| | |
|---|---|
| S3b) | preparing or providing a conductive material comprising interspaces, preferably comprising gas filled interspaces; |
| S4b) | applying the conductive material comprising interspaces, preferably gas filled interspaces, prepared or provided in step S3b) to the laminar electrically conductive material (ECM) resulting in step S2) so that a laminar electrically conductive material (ECM) covered with a conductive material comprising interspaces results; |
| S5b) | preparing or providing a catalytic material, wherein the catalytic material is capable to catalyse the oxygen reduction reaction of a gas diffusion electrode; |
| S6b) | applying the catalytic material prepared or provided in step S5b) as a coating to the surface of the conductive material comprising interspaces of the laminar electrically conductive material (ECM) covered with a conductive material comprising interspaces resulting in step S4b), so that a gas diffusion electrode (GDE) results. |

2. Method according to claim 1,
- wherein the gas diffusion electrode (GDE) is an oxygen reduction reaction (ORR) electrode;
and/or
- wherein the gas diffusion electrode (GDE) is a bifunctional electrode;
and/or
- wherein the producing of a foil from said mixture, so that a laminar electrically conductive material (ECM) results, comprising a polymeric matrix and, embedded therein, a particulate material in step S2) involves calendering;
and/or
- wherein the electrically conductive powder prepared or provided in step S1) at 20°C has an electrical conductivity of 0.01 S/m or higher, preferably determined according to section "2.1 Conductivity measurements" from the scientific publication "Electrical conductivity of carbonaceous powders" by the authors A. Celzard, J.F. Marêché, F. Payot and G. Furdin, published in Volume 40, Issue 15 on pages 2801 to 2815 of the scientific journal "Carbon" in 2002;
and/or
- wherein the laminar electrically conductive material (ECM) comprising a polymeric matrix and, embedded therein, a particulate material resulting in step S2) is an electrochemically conductive material.

3. Method according to any of the preceding claims, wherein the conductive material comprising interspaces prepared or provided in step S5a) or step S3b) is selected from the group consisting of:
- metallic mesh, preferably metallic mesh wherein the surface of the metallic mesh is able to catalyse the oxygen evolution reaction (OER) and/or the oxygen reduction reaction (ORR) of a gas diffusion electrode;
- metallic mesh at least partially coated, preferably fully coated, with a catalytic material, wherein preferably the surface of the catalytic material is able to catalyse the oxygen evolution reaction (OER) and/or the oxygen reduction reaction (ORR) of a gas diffusion electrode (GDE);
- metallic foam, preferably metallic foam wherein the surface of the metallic foam is able to catalyse the oxygen evolution reaction (OER) and/or the oxygen reduction reaction (ORR) of a gas diffusion electrode (GDE);
and
- metallic foam at least partially coated, preferably fully coated, with a catalytic material, wherein preferably the surface of the catalytic material is able to catalyse the oxygen evolution reaction (OER) and/or the oxygen reduction reaction (ORR) of a gas diffusion electrode (GDE).

4. Method according to any of the preceding claims,
- comprising the following additional steps after the gas diffusion electrode results in step S6a) or after the gas diffusion electrode results in step S6b):
| | |
|---|---|
| S7a) | preparing or providing a hydrophobic gas-permeable sheet (HGPS); |
| S8a) | contacting connecting of the second side |
| | - of the gas diffusion electrode resulting in step S6a) |
| | or |
| | - of the gas diffusion electrode resulting in step S6b) |
| | with the hydrophobic gas-permeable sheet (HGPS) prepared or provided in step S7) so that a gas diffusion electrode contacted with a hydrophobic gas-permeable sheet (HGPS) sheet results; |
| S9a) | pressing together the gas diffusion electrode contacted with a hydrophobic gas-permeable sheet (HGPS) sheet resulting in step S8a) |
with a pressure of at least 0.005 tonnes/cm², so that a leak proof gas diffusion electrode (GDE) results.

5. Method according to any of the preceding claims,
- wherein the electrically conductive powder prepared or provided in Step S1) is selected from the group consisting of:
- carbonaceous powder, preferably a carbonaceous powder with a specific surface area greater than 100 m²/g,
- nickel powder
and
- combinations thereof;
wherein preferably the carbonaceous powder, more preferably the carbonaceous powder with a specific surface area greater than 100 m²/g, is selected from the group consisting of:
- activated carbon,
- graphite,
- carbon black, preferably carbon black in an amount of 50 wt.-% or more with respect to the total mass of the electrically conductive powder prepared or provided in Step S1)
- carbon nanotube,
- graphene,
and
- combinations thereof;
and/or
- wherein the binder prepared or provided in Step S1) is selected from the group consisting of:
- fluorinated polymer, preferably fluorinated polymer selected from the group consisting of:
- polytetrafluoroethylene (PTFE)
- polyvinylidene fluoride (PVDF)
- fluorinated ethylene-propylene (FEP)
- polyethylenetetrafluoroethylene (ETFE)
- tetrafluoroethylene-perfluoro-3,6-dioxa-4-methyl-7-octenesulfonic acid copolymer (Nafion)
- polymeric ionomer composed from sulfonated polyether-etherketon (Fumion)
and
- combinations thereof;
preferably the fluorinated polymer is polytetrafluoroethylene (PTFE).

6. Method according to any of the preceding claims,
- wherein
- the gas diffusion electrode (GDE) comprises a hydrophobic gas-permeable sheet (HGPS)
and
the ratio of the total mass of
- the amount of electrically conductive powder prepared or provided in step S1) and present during the intermixing in step S2)
to
- the amount of binder prepared or provided in step S1) and present during the intermixing in step S2)
is in the range of from 61:39 to 90:10, preferably in the range of from 70:30 to 85:15;
or
- wherein
- the gas diffusion electrode (GDE) does not comprise a hydrophobic gas-permeable sheet (HGPS)
and
the ratio of the total mass of
- the amount of electrically conductive powder prepared or provided in step S1) and present during the intermixing in step S2)
to
- the amount of binder prepared or provided in step S1) and present during the intermixing in step S2)
is in the range of from 60:40 to 40:60.

7. Method according to any of the preceding claims,
- wherein the laminar electrically conductive material (ECM) resulting in step S2) has a thickness in the range of from 400 µm to 1000 µm, preferably in the range of from 500 µm to 900 µm, more preferably in the range of from 550 µm to 800 µm;
and/or
- wherein the electrically conductive material (ECM) resulting in Step S2) has an electrical conductivity at 20 °C of 1·10⁻⁶ S/m or higher, preferably 5·10⁻⁶ S/m or higher, more preferably 1·10⁻⁵ S/m or higher;
and/or
- wherein during the intermixing in step S2) agglomeration occurs;
and/or
- wherein
- the coating of the catalytic material prepared or provided in step S3a) onto the first side of the laminar electrically conductive material resulting in step S2) in step S4a)
or
- the applying of the catalytic material prepared or provided in step S5b) as a coating to the surface of the conductive material comprising interspaces in step S6b)
is carried out using one, two or more of the methods selected from the group consisting of:
- drop casting,
- slurry coating and subsequent blading,
- brushing
- calendering
and
- spray coating.

8. Method according to any of the preceding claims,
- wherein
- the catalytic material prepared or provided in step S3a)
or
- the catalytic material prepared or provided in step S5b) is selected from the group of catalytic materials consisting of:
- carbonaceous substances,
preferably
- activated carbon,
- carbon black,
- graphene,
- carbon nanotubes
- graphite and/or
- mixtures thereof;
- carbonaceous substances doped with heteroatoms,
- whereby the carbonaceous substances are preferably selected from the group consisting of:
- activated carbon,
- carbon black,
- graphene,
- carbon nanotubes
- graphite
and/or
- mixtures thereof;
and
- whereby the heteroatoms are preferably selected from the group consisting of:
- nitrogen (N),
- sulphur (S),
- boron (B)
and
- phosphorus (P);
- metals, preferably selected from the group consisting of:
Pt, Pd, Ir, Ag, K, Bi, Ce, La, Ni, Fe, Co, Cr, Cu, Zn, Mo, Zr, Mn, and Ba;
- oxides, preferably oxides produced by electrodeposition, of metals selected from the group consisting of:
Bi, Ce, La, Ni, Fe, Co, Cr, Cu, Zn, Mo, Zr, Mn and combinations thereof;
and/or
oxy-hydroxides of metals selected from the group consisting of:
Bi, Ce, La, Ni, Fe, Co, Cr, Cu, Zn, Mo, Zr, Mn and combinations thereof;
- sulphides, preferably sulphides produced by electrodeposition,
- phosphides, preferably phosphides produced by electrodeposition,
- nitrides,
- double perovskite oxides,
- high entropy perovskite oxides,
preferably high entropy perovskite oxide powder, comprising the metals La, Fe, Co, Mn, Cr and Zn;
and more preferably,
wherein the mass fraction of each metal selected from the group consisting of Fe, Co, Mn, Cr and Zn is in the range of 0.05 to 0.40, with respect to the total mass of the high entropy perovskite oxide powder;
and/or
- high entropy oxides, preferably high entropy oxides produced using the sol-gel-method, of any combination of any of the metals selected from the group consisting of:
Ni, Fe, Co, Cr, Cu, Zn, Mo, Zr, and Mn.

9. Method according to any of the preceding claims,
- wherein
- the catalytic material prepared or provided in step S3a)
or
- the catalytic material prepared or provided in step S5b) is prepared or provided as a catalyst slurry, preferably as a catalyst ink;
and/or
- wherein
- the catalytic material prepared or provided in step S3a)
or
- the catalytic material prepared or provided in step S5b)
comprises:
- an electrocatalyst material
- a binder
and, preferred,
- a conductive material
preferably, wherein the catalytic material prepared or provided in step S3) consists of:
- an electrocatalyst material, preferably in a mass fraction of from 0.4 to 0.6 with regard to the total mass of the catalytic material,
- a binder, preferably in a mass fraction of from 0.2 to 0.3 with regard to the total mass of the catalytic material,
and
- a conductive material, preferably in a mass fraction of from 0.1 to 0.4 with regard to the total mass of the catalytic material;
and/or
- wherein
- the catalytic material prepared or provided in step S3a)
or
- the catalytic material prepared or provided in step S5b)
has an electrical conductivity at 20°C of 1·10⁻⁶ S/m or higher, preferably of 5·10⁻⁴ S/m or higher, more preferably of 1·10⁻³ S/m or higher;
and/or
- wherein
- the catalytic material coating on the first side of the laminar electrically conductive material (ECM), resulting in step S4a)
or
- the catalytic material coating on the surface of the conductive material comprising interspaces in step S6b)
has a thickness of less than 100 µm, preferably less than 90 µm, more preferably less than 80 µm.

10. Method according to any of the preceding claims,
- wherein
- the catalytic material prepared or provided in step S3a)
or
- the catalytic material prepared or provided in step S5b) is selected from the group of catalytic materials consisting of:
- carbonaceous substances,
preferably
- activated carbon,
- carbon black,
- graphene,
- carbon nanotubes
- graphite
and/or
- mixtures thereof;
- carbonaceous substances doped with heteroatoms,
- whereby the carbonaceous substances are preferably selected from the group consisting of:
- activated carbon,
- carbon black,
- graphene,
- carbon nanotubes
- graphite
and/or
- mixtures thereof;
and
- whereby the heteroatoms are preferably selected from the group consisting of:
- nitrogen (N),
- sulphur (S),
- boron (B)
and
- phosphorus (P);
and is treated
- with CO₂ or water steam at a temperature in the range of from 600 °C to 1000 °C;
or
- with a gas-mixture essentially consisting of Ar and H₂, preferably 95 vol.-% Ar and 5 vol.-% H₂, at a temperature in the range of from 600 °C to 1000 °C;
or
- with NH₃ at a temperature in the range of from 600 °C to 1000 °C.

11. Method according to any of the preceding claims,
- wherein the hydrophobic gas-permeable sheet (HGPS) has a thickness in the range of from 20 µm to 250 µm, preferably in the range of from 65 µm to 180 µm, more preferably in the range of from 80 µm to 150 µm;
and/or
- wherein the hydrophobic gas-permeable sheet (HGPS) has a porosity in the range of from 50 % to 90 %, preferably in the range of from 55 % to 85 %, more preferably in the range of from 60 % to 80 %;
and/or
- wherein the hydrophobic gas-permeable sheet (HGPS) has a waterproofness pressure in the range of from 80 kPa to 120 kPa, preferably in the range of from 85 kPa to 115 kPa, more preferably in the range of from 90 kPa to 110 kPa.

12. Method according to any of the preceding claims, wherein the catalytic material in step S3a) or in step S5b) is prepared in a method comprising the following steps:
| | |
|---|---|
| SC-1) | preparing or providing: |
| | |
|---|---|
| | - an amount of a catalytic material powder |
| | and |
| | - an amount of binder; |
| SC-2) | intermixing the amount of catalytic material powder, prepared or provided in step SC-1) and the amount of binder prepared or provided in step SC-1) so that a mixture of catalytic material powder and binder results |
| | and |
| | producing a foil from said mixture for coating a first side of a laminar electrically conductive material so that a laminar electrically conductive material (ECM) coated on a first side with a catalytic material coating results. |

13. Method according to preceding claim 12, wherein in step SC-1) additionally an amount of a conductive powder, preferably an electrically conductive powder, is prepared or provided and wherein said amount of conductive powder, preferably electrically conductive powder, is additionally present during the intermixing in step SC-2) and is present in the mixture from which the foil is formed in Step SC-2).

14. Gas diffusion electrode (GDE) , preferably gas diffusion electrode producible or produced in a method according to any of claims 1 to 13, wherein
the gas diffusion electrode comprises at least:
a) a distinct layer, as electrically conductive layer, comprising an electrically conductive powder and a binder
b) a further distinct layer, as layer comprising a continuous conductive material, comprising interspaces filled with a different material
c) a further distinct layer comprising a catalytic material, as layer comprising a catalytic material, wherein the catalytic material is capable to catalyse oxygen reduction reaction (ORR) of a gas diffusion electrode.

15. Gas diffusion electrode (GDE) according to the preceding claim 14,
- wherein the gas diffusion electrode (GDE) is an oxygen reduction reaction (ORR) electrode
and/or
- wherein the gas diffusion electrode (GDE) is a bifunctional electrode.

16. Gas diffusion electrode (GDE) according to any of the preceding claims 14 to 15,
wherein the layer comprising a continuous conductive material comprising interspaces filled with a different material comprises:
- a metallic mesh, preferably a metallic mesh wherein the surface of the metallic mesh is able to catalyse the oxygen evolution reaction (OER) and/or the oxygen reduction reaction (ORR) of a gas diffusion electrode;
- a metallic mesh at least partially coated, preferably fully coated, with a catalytic material, wherein preferably the surface of the catalytic material is able to catalyse the oxygen evolution reaction (OER) and/or the oxygen reduction reaction (ORR) of a gas diffusion electrode;
- a metallic foam, preferably a metallic foam wherein the surface of the metallic foam is able to catalyse the oxygen evolution reaction (OER) and/or the oxygen reduction reaction (ORR) of a gas diffusion electrode;
and
- a metallic foam at least partially coated, preferably fully coated, with a catalytic material, wherein preferably the surface of the catalytic material is able to catalyse the oxygen evolution reaction (OER) and/or the oxygen reduction reaction (ORR) of a gas diffusion electrode.

17. Gas diffusion electrode (GDE) according to any of the preceding claims 14 to 16,
wherein the gas diffusion electrode (GDE) further comprises:
d) a hydrophobic gas-permeable sheet (HGPS), as a further distinct layer, preferably with the hydrophobic gas-permeable sheet (HGPS) being an outermost layer of the gas diffusion electrode (GDE).

18. Gas diffusion electrode (GDE) according to any of the preceding claims 14 to 17, wherein
the electrically conductive powder of the distinct layer, as electrically conductive layer, comprising an electrically conductive powder and a binder, is selected from the group consisting of:
- carbonaceous powder
- nickel powder
and
- combinations thereof
wherein preferably the carbonaceous powder is selected from the group consisting of:
- activated carbon,
- graphite,
- carbon black, preferably carbon black in an amount of 50 wt.-% or more with respect to the total mass of the electrically conductive powder present in the electrically conductive layer,
- carbon nanotube,
- graphene,
and
- combinations thereof;
and/or
- wherein the binder of the distinct layer, as electrically conductive layer, comprising an electrically conductive powder and a binder, is essentially, preferred is, a fluorinated polymer;
preferably a fluorinated polymer selected from the group consisting of:
- polytetrafluoroethylene (PTFE)
- polyvinylidene fluoride (PVDF)
- fluorinated ethylene-propylene (FEP)
- polyethylenetetrafluoroethylene (ETFE)
- tetrafluoroethylene-perfluoro-3,6-dioxa-4-methyl-7-octenesulfonic acid copolymer (Nation)
- polymeric ionomer composed from sulfonated polyether-etherketon (Fumion)
and
- combinations thereof;
more preferably the fluorinated polymer is polytetrafluoroethylene (PTFE).

19. Gas diffusion electrode (GDE) according to any of the preceding claims 17 to 18,
- wherein
- the gas diffusion electrode (GDE) comprises, as a distinct layer, a hydrophobic gas-permeable sheet (HGPS)
and
wherein within the electrically conductive layer, comprising an electrically conductive powder and a binder,
the ratio of
- the total mass of electrically conductive powder present in the electrically conductive layer
to
- the total mass of binder present in the electrically conductive layer
is in the range of from 61:39 to 90:10, preferably in the range of from 70:30 to 85:15;
or
- wherein
- the gas diffusion electrode (GDE) does not comprise, as a distinct layer, a hydrophobic gas-permeable sheet (HGPS)
and
wherein within the electrically conductive layer, comprising an electrically conductive powder and a binder
the ratio of
- the total mass of electrically conductive powder present in the electrically conductive layer
to
- the total mass of binder present in the electrically conductive layer
is in the range of from 60:40 to 40:60.

20. Gas diffusion electrode (GDE) according to any of the preceding claims 14 to 19,
- wherein the electrically conductive layer, comprising an electrically conductive powder and a binder, has a thickness in the range of from 400 µm to 1000 µm, preferably in the range of from 500 µm to 900 µm, more preferably in the range of from 550 µm to 800 µm;
and/or
- wherein the electrically conductive layer, comprising an electrically conductive powder and a binder has an electrical conductivity at 20 °C of 1·10⁻⁶ S/m or higher, preferably 5·10⁻⁶ S/m or higher, more preferably 1·10⁻⁵ S/m or higher;
and/or
- wherein the layer comprising a catalytic material
comprises a catalytic material or consists of a catalytic material, preferably consists of a catalytic material, selected from the group consisting of:
- carbonaceous substances,
preferably
- activated carbon,
- carbon black,
- graphene,
- carbon nanotubes
- graphite
and/or
- mixtures thereof;
- carbonaceous substances doped with heteroatoms,
- whereby the carbonaceous substances are preferably selected from the group consisting of:
- activated carbon,
- carbon black,
- graphene,
- carbon nanotubes
- graphite
and/or
- mixtures thereof;
and
- whereby the heteroatoms are preferably selected from the group consisting of:
- nitrogen (N),
- sulphur (S),
- boron (B)
and
- phosphorus (P);
- metals, preferably selected from the group consisting of:
Pt, Pd, Ir, Ag, K, Bi, Ce, La, Ni, Fe, Co, Cr, Cu, Zn, Mo, Zr, Mn, and Ba;
- oxides, preferably oxides produced by electrodeposition, of metals selected from the group consisting of:
Bi, Ce, La, Ni, Fe, Co, Cr, Cu, Zn, Mo, Zr, Mn and combinations thereof;
and/or
oxy-hydroxides of metals selected from the group consisting of:
Bi, Ce, La, Ni, Fe, Co, Cr, Cu, Zn, Mo, Zr, Mn and combinations thereof;
- sulphides, preferably sulphides produced by electrodeposition,
- phosphides, preferably phosphides produced by electrodeposition,
- nitrides,
- double perovskite oxides,
- high entropy perovskite oxides,
preferably high entropy perovskite oxide powder, comprising the metals La, Fe, Co, Mn, Cr and Zn;
and more preferably,
wherein the mass fraction of each metal selected from the group consisting of Fe, Co, Mn, Cr and Zn is in the range of 0.05 to 0.40, with respect to the total mass of the high entropy perovskite oxide powder;
and/or
- high entropy oxides, preferably high entropy oxides produced using the sol-gel-method, of any combination of any of the metals selected from the group consisting of:
Ni, Fe, Co, Cr, Cu, Zn, Mo, Zr, and Mn ;
and/or
- wherein the layer comprising a catalytic material comprises a catalytic material having an electrical conductivity at 20°C of 1·10⁻⁶ S/m or higher, preferably of 5·10⁻⁴ S/m or higher, more preferably of 1·10⁻³ S/m or higher;
and/or
- wherein the layer comprising a catalytic material has a thickness of less than 100 µm, preferably less than 90 µm, more preferably less than 80 µm.

21. Gas diffusion electrode (GDE) according to any of the preceding claims 17 to 20,
- wherein the gas diffusion electrode (GDE) comprises a hydrophobic gas-permeable sheet (HGPS) and said hydrophobic gas-permeable sheet (HGPS) has a thickness in the range of from 20 µm to 250 µm, preferably in the range of from 65 µm to 180 µm, more preferably in the range of from 80 µm to 150 µm;
and/or
- wherein the gas diffusion electrode (GDE) comprises a hydrophobic gas-permeable sheet (HGPS) and said hydrophobic gas-permeable sheet (HGPS) has a porosity in the range of from 50 % to 90 %, preferably in the range of from 55 % to 85 %, more preferably in the range of from 60 % to 80 %;
and/or
- wherein the gas diffusion electrode comprises (GDE) a hydrophobic gas-permeable sheet (HGPS) and said hydrophobic gas-permeable sheet (HGPS) has wherein the hydrophobic gas-permeable sheet (HGPS) has a waterproofness pressure in the range of from 80 kPa to 120 kPa, preferably in the range of from 85 kPa to 115 kPa, more preferably in the range of from 90 kPa to 110 kPa;
and/or
- whereby the gas diffusion electrode has a thickness in the range of from 550 µm to 800 µm, preferably in the range of from 580 µm to 770 µm, more preferably in the range of from 600 µm to 750 µm;
and/or
- whereby the gas diffusion electrode has at least one side with a macroscopic surface area of 1 m² to 100 m², preferably two sides with a macroscopic surface area of 1 m² to 100 m² each.

22. Electrochemical device, preferably metal air battery, comprising a gas diffusion electrode as defined by any of the preceding claims 14 to 21.

23. Electrochemical device, according to claim 22,
wherein the electrochemical device is selected from the group consisting of:
- Energy storage device, preferably metal air battery;
- Fuel cells;
and
- CO₂ capture equipment.

24. Use of a gas diffusion electrode according to any of the preceding claims 14 to 21 in an energy storage device, preferably in a metal air battery.

25. A battery,
- either comprising
- a first vessel;
- a bifunctional air electrode; preferably a bifunctional electrode producible or produced, preferably produced, in a method according to any of the preceding claims 1 to 13 and/or a bifunctional electrode as defined by any of the preceding claims 14to21;
- a metal electrode;
and
- a first volume of liquid electrolyte within the first vessel, wherein the first volume of liquid electrolyte separates the bifunctional air electrode from the metal electrode; or
- comprising
- a first vessel;
- an oxygen reduction reaction (ORR) electrode, preferably an oxygen reduction reaction (ORR) electrode producible or produced, preferably produced, in a method according to any of the preceding claims 1 to 13
and/or
an oxygen reduction reaction (ORR) electrode as defined by any of the preceding claims 14 to 21;
- an oxygen evolution reaction (OER) electrode,
- a metal electrode;
and
- a first volume of liquid electrolyte within the first vessel, wherein the first volume of liquid electrolyte separates from one another the oxygen reduction reaction (ORR) electrode, the oxygen evolution reaction (OER) electrode and the metal electrode.
